# EUROPÄISCHE PATENTSCHRIFT

(11) **EP 3 649 625 B1**
(45) Veröffentlichungstag und Bekanntmachung des Hinweises auf die Patenterteilung: **31.08.2022**
(21) Anmeldenummer: 18724853.9
(22) Anmeldetag: 14.05.2018
(51) Int. Cl.: G07C 9/00

(54) **VERFAHREN ZUR DELEGATION VON ZUGRIFFSRECHTEN**
METHOD FOR DELEGATING ACCESS RIGHTS
PROCÉDÉ DE DÉLÉGATION DE DROITS D'ACCÈS

(30) Priorität: 07.07.2017 DE 102017115298
(43) Veröffentlichungstag der Anmeldung: 13.05.2020
(73) Patentinhaber: HUF Hülsbeck & Fürst GmbH & Co. KG, 42551 Velbert (DE)
(72) Erfinder: KÄUFER, Uwe, 47055 Duisburg (DE); REHDER, Benedikt, 42551 Velbert (DE); LANZE, Fabian, 40468 Düsseldorf (DE); DE PALY, Michael, 44267 Dortmund (DE)
(74) Vertreter: Zenz Patentanwälte Partnerschaft mbB
(86) Internationale Anmeldenummer: PCT/EP2018/062403
(87) Internationale Veröffentlichungsnummer: WO 2019/007574

(56) Entgegenhaltungen:
- EP-A1- 1 662 698
- DE-A1-102014 217 899
- DE-A1-102014 219 502
- DE-A1-102015 122 469
- DE-U1-202016 107 487

## Beschreibung

Die Erfindung betrifft ein Verfahren zur Delegation von Zugriffsrechten auf gesicherte Objekte. Insbesondere betrifft die Erfindung ein Verfahren, bei dem individuelle Zugriffsprivilegien bezüglich gesicherter Objekte an mobile Kommunikationseinrichtungen von Individuen verteilt werden und von diesen Individuen von deren mobilen Kommunikationseinrichtungen an die mobilen Kommunikationseinrichtungen anderer Individuen weitergegeben (delegiert) werden.

Die Verwaltung von Zugriffsrechten oder Benutzungsrechten ist in vielen Bereichen der Technik zu finden. Beispielsweise gibt es komplexe Rechtehierarchien und -schemata bei der Verwaltung von Zugriffsprivilegien in Computersystemen. Dort wird einem Individuum, welches sich selber dem Computersystem gegenüber durch beispielsweise eine geheime Kennung oder biometrische Daten identifiziert, der Zugriff auf Dienste oder Daten des Rechnersystems gewährt. Reichen die zugewiesenen Rechte oder Privilegien nicht aus, um eine von den Individuen angeforderte Aktion durchzuführen, wird die Durchführung durch technische Maßnahme unterbunden.

In anderen Bereichen der Technik sind Schließsysteme bekannt, bei denen zur Zugriffskontrolle Schließmittel von Individuen mitgeführt werden und identifiziert werden, um den Zugriff auf eine Funktion, beispielsweise einem Zugang zu einem Bereich zu prüfen. Dies können beispielsweise Fahrzeugschlüssel mit elektronischen Kommunikationskomponenten oder Schlüsselkarten für Zugangssysteme sein. Im Gebiet der individuellen Fahrzeugnutzung sind hier beispielsweise Keyless-Entry- und Keyless-Go-Systeme zu nennen. Bei diesen Systemen führt ein Benutzer einen als ID-Geber bezeichneten Fahrzeugschlüssel mit sich. Dieser ID-Geber enthält codierte Informationen, die einem Fahrzeug gegenüber die Berechtigung des Trägers des ID-Gebers zur Ausübung von Funktion legitimieren. Ein solcher ID-Geber kann ohne weiteres an andere Individuen weitergegeben werden, so dass diese ebenfalls in der Lage sind, mit dem ID-Geber die Fahrzeugfunktionen aufzurufen und zu bestätigen.

Außerdem ist es bekannt, nicht nur die mit Fahrzeugen ausgelieferten elektronischen ID-Geber, sondern auch andere elektronische Einrichtungen als Legitimationsmittel für den Zugang zum Fahrzeug und die Auslösung von Fahrzeugfunktionen zu verwenden. Beispielsweise beschreibt die US 2013/0259232 A1 ein System zur Kopplung oder Paarung eines Mobiltelefons mit einem Fahrzeug, um mit dem Mobiltelefon Fahrzeugfunktionen ansteuern zu können.

Das Dokument DE 10 2014 219502 offenbart ein Verfahren und System für den Zugang zu Fahrzeugen. Dabei ist vorgesehen, dass von einem Schlüssel Berechtigungsinformationen auf ein Mobilgerät übertragen werden. Diese Berechtigungsinformationen können Beschränkungen hinsichtlich der Zugriffsrechte erhalten, zum Beispiel ausschließlich einen Zugriff auf Funktionen zum Öffnen bestimmter Fahrzeugtüren ermöglichen.

Die DE 10 2011 078 018 A1 beschreibt ein System zum Ausführen von Fahrzeugfunktionen, bei dem eine Telematik-Zentrale einen Teil der Kommunikation mit dem Fahrzeug ausführt.

Aus der EP 1 910 134 B1 ist ein System mit einer zentralen Verwaltungseinrichtung bekannt, welche Datenpakete als Schlüssel an mobile Zugriffseinrichtungen verteilt.

Die WO 2015/176826 offenbart schließlich ein System zur Verwaltung und Zuordnungen von Rechten, bei dem eine zentrale Verwaltungseinheit sowohl mit mobilen Kommunikationseinrichtungen als auch mit Steuereinrichtungen in den geschützten Objekten in Verbindung steht und die Verteilung der Zugriffsrechte koordiniert.

Die bekannten Verfahren schöpfen jedoch die Vorteile der Unkörperlichkeit einer Zugriffsberechtigung noch nicht in zufriedenstellendem Maße aus. Während bei einem Fahrzeugschlüssel die Weitergabe des Schlüssels immer auch eine Abgabe impliziert, kann theoretisch die Duplikation von Zugriffsrechten von einer mobilen Kommunikationseinrichtung eines ersten Berechtigten auf die mobile Kommunikationseinrichtung eines zweiten Berechtigten einen deutlichen Komfort- und Nutzungsgewinn für eine Fahrzeugnutzung mit sich bringen. Es ist nicht nötig, ein physisches Objekt zu duplizieren oder eine Mehrzahl von Schlüsseln vorrätig zu halten, stattdessen können die Schlüsselinformationen als körperlose Daten weitergegeben werden. Andererseits bringt eine solche Delegation von Rechten Probleme mit sich, da jederzeit sicherzustellen ist, dass bei dem abzusichernden Objekt überprüfbar bleibt, ob der Benutzer tatsächlich die Zugriffsrechte durch bewusste Delegation eines Rechteinhabers erhalten hat oder sich diese, beispielsweise durch Kopie der Daten, unrechtmäßig angeeignet hat.

Aufgabe der Erfindung ist es, ein verbessertes Verfahren zur Delegation von Zugriffsrechten auf geschützte Objekte zur Verfügung zu stellen.

Die Aufgabe wird gelöst durch ein Verfahren mit den Merkmalen des Patentanspruchs 1 sowie ein Verfahren mit den Merkmalen des Patentanspruchs 7.

Gemäß der Erfindung werden mobile Kommunikationseinrichtungen verwendet, die Benutzer eines zu sichernden Objektes, beispielsweise eines Autos, eines Hauses, eines Safes oder einer sonstigen geschützten Einrichtung, mit sich führen. Diese mobilen Kommunikationseinrichtungen werden zur Speicherung der Zugriffsrechte verwendet. Die mobilen Kommunikationseinrichtungen sind dabei so ausgebildet, dass sie mit dem zu sichernden Objekt in Datenaustausch treten können, beispielsweise durch eine drahtlose Funkverbindung kurzer Reichweite (z. B. Bluetooth oder WLAN oder NFC).

Gemäß der Erfindung werden die Zugriffsrechte zunächst an einen Primärbenutzer erster Ordnung, nämlich an dessen erste mobile Kommunikationseinrichtung übermittelt. Dazu stellt eine zentrale Verwaltungseinheit, beispielsweise ein über Internet erreichbarer vertrauenswürdiger Server als Rechteverwalter, ein Datenpaket erster Ordnung bereit. Dieses Datenpaket erster Ordnung enthält eine eindeutige Identifikationskennung, welches das Datenpaket unter allen von der zentralen Verwaltungseinrichtung ausgegebenen Datenpaketen eindeutig identifiziert. Weiterhin wird in das erste Datenpaket eine erste Datenmenge eingebracht, die eine Liste von Zugriffsrechten auf wenigstens eine konkrete gesicherte Einrichtung enthält. Diese erste Datenmenge kann eine eindimensionale oder mehrdimensionale Liste sein, die zumindest darlegt, welche Funktionen von dem Inhaber dieses Datenpaketes betätigt werden dürfen und welche Funktionen gesperrt sind.

Weiterhin enthält das Datenpaket erster Ordnung ein erstes Datengeheimnis, welches zur Verschlüsselung und Endschlüsselung von Daten verwendbar ist. Das Datengeheimnis kann beispielsweise eine Zeichenfolge sein, die zur Verschlüsselung verwendet wird.

Dieses Datenpaket erster Ordnung wird an die erste mobile Kommunikationseinrichtung des Benutzers erster Ordnung zugewiesen. Benutzer erster Ordnung kann beispielsweise ein Inhaber oder Mieter des zu sichernden Objektes sein, beispielsweise ein Leasingnehmer oder ein Kunde einer Fahrzeugvermietung, der ein Fahrzeug gemietet hat.

Das Datenpaket erster Ordnung wird in der mobilen Kommunikationseinrichtung des Benutzers erster Ordnung gespeichert und der Benutzer erster Ordnung kann mit diesem Datenpaket erster Ordnung auf das zu sichernde Objekt zugreifen. Gemäß einem ersten Aspekt der Erfindung wird dazu das Datenpaket erster Ordnung auch von der zentralen Verwaltungseinrichtung an eine Steuereinrichtung der gesicherten Einrichtung übermittelt. Diese Übermittlung kann beispielsweise über ein öffentliches Kommunikationsnetzwerk erfolgen. Das Datenpaket erster Ordnung wird in der Steuereinrichtung gespeichert und es stehen damit sowohl dem Benutzer mit seiner mobilen Kommunikationseinrichtung als auch der Steuereinrichtung im zu sichernden Objekt dieselben Informationen zur Verfügung. Gemäß diesen Informationen kann sich ein Benutzer gegenüber der Steuereinrichtung des zu sichernden Objekts legitimieren, insbesondere da es für die Steuereinrichtung des zu sichernden Objekts möglich ist, über die eindeutige Identifikationskennung und weitere Dateninhalte den Inhalt des Datenpaketes zu überprüfen.

Ein wesentlicher Aspekt der Erfindung besteht darin, dass ohne Mitwirkung der zentralen Verwaltungseinrichtung, eine Delegation von Benutzungsdaten an weitere Personen nachrangiger Ordnung und deren jeweilige Kommunikationseinrichtung möglich ist. Dies ist insbesondere dann von Bedeutung, wenn zwischen einem Teilnehmer erster Ordnung mit seiner ersten mobilen Kommunikationseinrichtung keine Kommunikationsverbindung mit der zentralen Verwaltungseinrichtung möglich ist. Eine solche Offline-Berechtigungsdelegation kann beispielsweise nötig werden, wenn die erste mobile Kommunikationseinrichtung kein öffentliches Kommunikationsnetzwerk erreichen kann. Auch in einem solchen Fall soll es möglich sein, einen weiteren Benutzer solche Zugriffsrechte (oder einen eingeschränkten Teil davon) weiterzugeben, die dem Benutzer erster Ordnung zugewiesen wurden.

Zu diesem Zweck wird erfindungsgemäß vorgesehen, dass in der ersten mobilen Kommunikationseinrichtung des Benutzers erster Ordnung ein Datenpaket zweiter Ordnung bereitgestellt wird. Dieses Datenpaket zweiter Ordnung umfasst sowohl Daten des ersten Datenpaketes als auch neu erstellte Daten. Insbesondere umfasst das Datenpaket zweiter Ordnung eine eindeutige zweite Identifikationskennung sowie erste Referenzdaten, welche eine Referenz auf das Datenpaket erster Ordnung enthalten. Die Referenzdaten zeigen also an, von welchem Datenpaket erster Ordnung dieses Datenpaket zweiter Ordnung abstammt. Außerdem ist eine zweite Datenmenge in dem Datenpaket zweiter Ordnung enthalten, mit einer Auflistung von Zugriffsrechten auf die gesicherte Einrichtung, wobei die zweite Datenmenge eine Teilmenge (Untermenge) der ersten Datenmenge ist. Unter Teilmenge ist in diesem Zusammenhang zu verstehen, dass die enthaltenen Zugriffsrechte nicht über die Rechte hinausgehen können, die in den Zugriffsrechten der ersten Datenmenge in dem Datenpaket erster Ordnung enthalten war.

Weiterhin ist ein zweites Datengeheimnis in dem Datenpaket zweiter Ordnung enthalten, welches zur Verschlüsselung und Entschlüsselung von Daten verwendbar ist. Diese Daten sind grundsätzlich lesbar in dem Datenpaket zweiter Ordnung enthalten. Weiterhin ist in dem Datenpaket zweiter Ordnung ein verschlüsselter Datencontainer mit Daten enthalten, welcher wenigstens die eindeutige erste Identifikationskennung und außerdem auch das zweiten Datengeheimnis enthält. Diese Daten des Containers sind unter Verwendung des ersten Datengeheimnisses verschlüsselt und nur für einen Inhaber des ersten Datengeheimnisses zu entschlüsseln.

Weiterhin ist das Datenpaket zweiter Ordnung unter Verwendung des ersten Datengeheimnisses signiert.

Dieses signierte Datenpaket zweiter Ordnung wird von der ersten mobilen Kommunikationseinrichtung an eine zweite mobile Kommunikationseinrichtung übermittelt, welche einem Benutzer zweiter Ordnung zugeordnet ist. Die Übermittlung kann insbesondere drahtlos, per Bluetooth oder NFC oder über WLAN erfolgen.

Diese zweite Kommunikationseinrichtung ist mit dieser Weiterleitung des Datenpakets bezüglich der Zugriffsrechte zweiter Ordnung der ersten Kommunikationseinrichtung hierarchisch nachgeordnet. Die zweite Kommunikationseinrichtung leitet ihre Zugriffsrechte aus einer Übergabe von Zugriffsrechten der ersten Kommunikationseinrichtung ab. Das erfindungsgemäße Verfahren ermöglicht die Ableitung von Benutzungsrechten eines autorisierten Benutzers, welcher von einer zentralen Verwaltungseinrichtung ein Datenpaket erster Ordnung enthalten hat. Da dieses Datenpaket gemäß diesem Aspekt der Erfindung sowohl an die erste mobile Kommunikationseinrichtung des Benutzers erster Ordnung gesandt wurde, als auch an die Steuereinrichtung der gesicherten Einrichtung verfügen diese beiden Systeme über das Datenpaket erster Ordnung. Es ist jedoch zu beachten, dass die Erstellung des Datenpaketes zweiter Ordnung durch die erste mobile Kommunikationseinrichtung erfolgt und nicht durch die zentrale Verwaltungseinrichtung oder durch die Steuereinrichtung in der gesicherten Einrichtung. Der Benutzer erster Ordnung mit seiner ersten mobilen Kommunikationseinrichtung ist in der Lage, ausgehend von seinen eigenen Rechten, eine gesicherte und nachprüfbare Weitergabe von Rechten an einen Benutzer zweiter Ordnung mit einer zweiten mobilen Kommunikationseinrichtung zu veranlassen. Gemäß der Erfindung kann diese Kette fortgeführt werden und eine Ableitung von dem Benutzer zweiter Ordnung auf weitere, nachrangige Benutzer vorgenommen werden. Wesentlich ist, dass für die Steuereinrichtung der gesicherten Einrichtung die ordnungsgemäße Ableitung der Rechte von dem ersten Benutzer nachprüfbar bleibt. Dazu dienen die verschlüsselten Container, die mit jeder Ebene der Rechteweitergabe hinzugefügt werden.

Es geht aus dem Vorstehenden hervor, dass zwar das erste Datengeheimnis in dem Datenpaket erster Ordnung vorhanden ist, und damit in der ersten mobilen Kommunikationseinrichtung sowie der Steuereinrichtung des zu sichernden Objektes vorliegt, dieses Datengeheimnis jedoch nicht im Datenpaket zweiter Ordnung enthalten ist. Vielmehr ist das erste Datengeheimnis nur dazu verwendet worden, den Container im Datenpaket zweiter Ordnung zu verschlüsseln und das Datenpaket zu signieren. Auf diese Weise verfügt die zweite mobile Kommunikationseinrichtung über Daten, die ihr selbst jedoch nicht lesbar zugänglich sind, die für das zu sichernde Objekt jedoch mit dem dort verfügbaren ersten Datengeheimnis entschlüsselbar sind. Die Daten in dem Datencontainer dienen dann zur Verifikation der ordnungsgemäßen Zuordnung einer Rechtehierarchie und der Verifikation der Authentizität. Denn die Signatur mit dem Datengeheimnis erster Ordnung stellt sicher, dass die Datenstruktur in dem Datenpaket zweiter Ordnung nicht verändert oder korrumpiert wurde.

Die Erfindung basiert also auf ein Konzept, eine Kette von Berechtigungen mit hierarchischer Struktur zu bilden, wobei jedem nachgeordneten Benutzer und dessen mobiler Kommunikationseinrichtung Daten aus übergeordneten Hierarchieebenen übermittelt werden, die jedoch von dem Teilnehmer der nachgeordneten Hierarchieebene nicht sämtlich lesbar sind und insbesondere nicht zu modifizieren sind, da sie die Signatur der übergeordneten Hierarchieebene tragen. Auf diese Weise kann eine Kette von Autorisierungen erstellt werden, die für die Steuereinrichtung des zu sichernden Objektes jederzeit nachprüfbar bleibt, auch wenn die Delegation der Rechte ohne Kenntnis oder Kontrolle des zu sichernden Objektes und dessen Steuereinrichtung sowie auch ohne Kenntnis der zentralen Verwaltungseinrichtung erfolgt ist.

Die Struktur der Datenpakete ist dabei, je nach Bedarf, an die herkömmlichen und gängigen Codierungen von Datenpaketen anpassbar. Insbesondere ist die Nutzung der Erfindung nicht auf eine bestimmte Art der Datencodierung eingeschränkt. Wenn von Datenmengen die Rede ist, ist damit insbesondere eine Datenliste oder ein Datenarray gemeint, welches zur strukturierten Datenübermittlung Verwendung findet. Unter dem Begriff des Datengeheimnisses ist allgemein jede beliebige Zeichenfolge oder Datenstruktur zu verstehen, welche die Verschlüsselung und Signatur eines Datenpaketes erlaubt. Dabei kann das Datengeheimnis durchaus komplex aufgebaut sein, insbesondere mehre Abschnitte von Daten enthalten, die zu unterschiedlichen Zwecken verwendet werden.

Die Übermittlung der Daten einerseits von der zentralen Verwaltungseinrichtung an die mobilen Kommunikationseinrichtungen sowie die Steuereinrichtung der gesicherten Einrichtung und andererseits von einer mobilen Kommunikationseinrichtung zu einer weiteren mobilen Kommunikationseinrichtung erfolgt gemäß dem etablierten Datenübertragungsverfahren. Beispielsweise kann eine Übertragung über ein öffentliches Datennetz oder durch kurzreichweitigen Funkverbindungen erfolgen. Die Datenverbindungen und Datenübertragungen können dabei jederzeit mit dem etablierten Verfahren verschlüsselt oder sonst wie gesichert werden.

Unter mobilen Kommunikationseinrichtungen ist im Rahmen dieser Erfindung jede Einrichtung, die vom Benutzer mitführbar ist, zu verstehen, insbesondere Mobiltelefone und tragbare Computer sowie auch sonstige kommunikationsfähige Geräte (z. B. Wearables).

In einer Weiterbildung der Erfindung enthält die erste Datenmenge in dem Datenpaket erster Ordnung zusammen mit der Auflistung von Zugriffsrechten, diesen Zugriffsinformationen zugeordnete Delegationsberechtigungen, welche anzeigen, welche der aufgelisteten Zugriffsrechte an hierarchisch nachgeordnete Kommunikationseinrichtungen delegierbar sind.

Gemäß dieser Ausbildung der Erfindung ist vorgesehen, dass die Weitergabe von Zugriffsrechten auf die gesicherte Einrichtung beschränkt werden kann, was durch die Delegationsberechtigungen in der ersten Datenmenge dargestellt wird. Ist das gesicherte Objekt beispielsweise ein Fahrzeug, können getrennte Zugriffsrechte für den Zugang zu dem Fahrzeug, beispielsweise das Öffnen der Fahrertür einerseits und das Öffnen der Heckklappe andererseits getrennt mit Delegationsberechtigungen belegt sein. Beispielsweise kann ein Nutzer eines Fahrzeuges das Recht haben, die Zugriffsberechtigung für das Öffnen der Heckklappe zu delegieren, nicht jedoch die Zugriffsberechtigung für das Öffnen der Fahrertür. Gleiches gilt für beispielsweise den Start des Motors oder das Fahren des Fahrzeuges zu bestimmten Tageszeiten. Auf diese Weise kann einerseits jede in der Rechtevergabe involvierte mobile Kommunikationseinrichtung und andererseits die Steuereinrichtung des gesicherten Objektes verifizieren, ob die übertragenen Rechte tatsächlich hätte übertragen werden dürfen.

Gemäß einer bevorzugten Weiterbildung der Erfindung enthalten das erste Datengeheimnis und/oder das zweite Datengeheimnis jeweils mehrere Komponenten, so dass für die Verschlüsselung unter Verwendung eines Datengeheimnisses eine andere Komponente des Datengeheimnisses verwendbar ist als für die Signatur unter Verwendung des jeweiligen Datengeheimnisses.

Wie oben dargelegt, wird sowohl eine Verschlüsselung als auch eine Signatur unter Verwendung des ersten Datengeheimnisses durchgeführt. Dabei kann es gemäß der hier beschriebenen bevorzugten Ausgestaltung vorgesehen sein, unterschiedliche Komponenten des ersten Datengeheimnisses für die Signatur einerseits und die Verschlüsselung andererseits zu verwenden. In diesem Sinne enthält das Datengeheimnis also eine Mehrzahl an Komponenten, die für Verschlüsselungen und Signaturen heranzuziehen sind.

Gemäß einer bevorzugten Ausführungsform der Erfindung enthält das erfindungsgemäße Verfahren weitere Schritte, um die Rechte von dem Benutzer zweiter Ordnung und dessen zweiter mobiler Kommunikationseinrichtung auf einen Benutzer dritter Ordnung und einer diesem zugeordneten mobilen dritten Kommunikationseinrichtung zu übertragen. Dazu wird in der zweiten mobilen Kommunikationseinrichtung ein Datenpaket dritter Ordnung bereitgestellt (erzeugt), wobei das Datenpaket dritter Ordnung wenigstens eine eindeutige dritte Identifikationskennung enthält und zweite Referenzdaten, welche eine Referenz wenigstens auf eines der Datenpakete erster Ordnung und/oder zweiter Ordnung enthalten. Außerdem ist in dem Datenpaket dritter Ordnung eine dritte Datenmenge mit einer Auflistung von Zugriffsrechten auf eine gesicherte Einrichtung enthalten, wobei die dritte Datenmenge eine Teilmenge der zweiten Datenmenge ist. Weiterhin ist der mit dem ersten Datengeheimnis verschlüsselte erste Datencontainer enthalten, dieser wird also aus dem Datenpaket zweiter Ordnung übernommen. Außerdem ist ein mit dem zweiten Datengeheimnis verschlüsselter zweiter Datencontainer enthalten, welcher wenigstens die eindeutige zweite Identifikationskennung erhält. Das Datenpaket dritter Ordnung ist unter Verwendung des zweiten Datengeheimnisses in der zweiten mobilen Kommunikationseinrichtung signiert und wird als signiertes Datenpaket dritter Ordnung an eine mobile dritte Kommunikationseinrichtung übermittelt. Diese dritte mobile Kommunikationseinrichtung ist einem Benutzer dritter Ordnung zugeordnet, der dem Benutzer zweiter Ordnung hinsichtlich der Benutzungsrechte des gesicherten Objektes hierarchisch nachgeordnet ist.

Gemäß dieser weiteren Ausbaustufe der Erfindung, ist es möglich, die Rechte ohne weiteres Zutun des Benutzers erster Ordnung und dessen erster mobiler Kommunikationseinrichtung, außerdem ohne Zutun der zentralen Verwaltungseinrichtung und auch ohne Mitwirkung der Steuereinrichtung des gesicherten Objektes zu delegieren. Dabei wird ersichtlich, dass der verschlüsselte Datencontainer aus den übergeordneten Hierarchieebenen, nämlich der zweiten mobilen Kommunikationseinrichtung weitergegeben wird, wobei ein Datencontainer angehängt wird und damit die dritte mobile Kommunikationseinrichtung die verschlüsselten Datencontainer aus den vorangehenden Hierarchieebenen übernimmt. Dabei ist zu beachten, dass die Datencontainer jeweils mit unterschiedlichen Datengeheimnissen verschlüsselt sind und für die dritte mobile Kommunikationseinrichtung nicht lesbar sind.

Bei einem Zugriff auf das gesicherte Objekt ist die Steuereinheit jedoch nach einem Datenaustausch mit jeder der mobilen Kommunikationseinrichtungen nach Übermittlung des Datenpaketes in der Lage, zumindest zunächst den Container zu entschlüsseln, der mit dem ersten Datengeheimnis verschlüsselt wurde, welches auch der Steuereinrichtung der gesicherten Einrichtung übermittelt wurde. Da sich in diesem Container wiederum das zweite Datengeheimnis befindet, mit dem der Container der nächsten, nachgeordneten Hierarchieebene verschlüsselt wurde, ist eine sukzessive Entschlüsselung der Container und Prüfung der Signaturen möglich. Die Steuereinrichtung des zu sichernden Objektes muss lediglich wissen, den Inhalt welchen Datenpaketes sie zu Beginn hat, wofür die Referenzen in den Datenpaketen herangezogen werden können.

Gemäß einer bevorzugten Ausgestaltung der Erfindung wird der Zugriff auf das gesicherte Objekt mit der zweiten Kommunikationseinrichtung realisiert. Die zweite Kommunikationseinrichtung hat das Datenpaket zweiter Ordnung von der ersten Kommunikationseinrichtung des primären Benutzers erhalten. Ein Benutzer der zweiten Ordnung tritt mit seiner zweiten mobilen Kommunikationseinrichtung an die Steuereinrichtung der gesicherten Einrichtung heran, nimmt insbesondere eine Datenkommunikation mit dieser auf. Dabei wird das Datenpaket zweiter Ordnung von der zweiten mobilen Kommunikationseinrichtung an die Steuereinrichtung der gesicherten Einrichtung übertragen. Die Steuereinrichtung liest die ersten Referenzdaten aus dem Datenpaket zweiter Ordnung aus und ruft innerhalb der Steuereinrichtung die durch diese ersten Referenzdaten referenzierten Inhalte des Datenpakets erster Ordnung auf. Es ist in Erinnerung zu rufen, dass das Datenpaket erster Ordnung von der zentralen Verwaltungseinrichtung an die Steuereinrichtung des zu sichernden Objektes übertragen wurde. Nach Aufruf dieses Datenpaketes ist die Steuereinrichtung des zu sichernden Objektes insbesondere im Besitz des ersten Datengeheimnisses und verifiziert damit die Signatur des Datenpaketes zweiter Ordnung, welches sie von der zweiten mobilen Kommunikationseinrichtung erhalten hat. Nach erfolgreicher Verifikation wird der erste Datencontainer, der aus dem Datenpaket zweiter Ordnung stammt, in der Steuereinrichtung unter Verwendung des ersten Datengeheimnisses entschlüsselt. Im Anschluss daran kann die eindeutige Identifikationskennung aus dem entschlüsselten Container verifiziert werden und auch das zweite Datengeheimnis in der Steuereinrichtung des zu sichernden Objektes abgespeichert werden, sofern eine hierarchische Delegation über mehr als eine Ebene vorgesehen werden sollte. Schließlich werden die Zugriffsrechte aus der zweiten Datenmenge des Datenpakets zweiter Ordnung anhand der Zugriffsrechte aus der ersten Datenmenge verifiziert, es wird also geprüft, ob die Zugriffsrechte im Rahmen der delegationsfähigen Rechte des Datenpakets erster Ordnung liegen.

Sind sämtliche dieser Prüfungen erfolgreich, sichert die Steuereinrichtung des zu sichernden Objektes die Zugriffsrechte aus der zweiten Datenmenge als Zugriffsrecht der zweiten Kommunikationseinrichtung. Damit ist ein Zugriff des Benutzers zweiter Ordnung auf das zu sichernde Objekt in sicherer Weise delegiert worden, ohne dass eine Verbindung vor dem Zugriff auf das Objekt stattgefunden hat.

Analog erfolgt in einer bevorzugten Ausführungsform der Erfindung der Zugriff auf das zu sichernde Objekt durch einen Benutzer dritter Ordnung mit einer dritten mobilen Kommunikationseinrichtung. Wiederum wird eine Verbindung zwischen der dritten mobilen Kommunikationseinrichtung und der Steuereinrichtung der gesicherten Einrichtung hergestellt. Das Datenpaket dritter Ordnung wird von der dritten mobilen Kommunikationseinrichtung an die Steuereinrichtung der gesicherten Einrichtung übertragen. Da die Referenzdaten unverschlüsselt lesbar sind, kann die Steuereinrichtung des gesicherten Objektes diese Referenzdaten auslesen und die in der Steuereinrichtung gespeicherten Datenpakete höherer Ordnung lokalisieren. Dabei kann es durchaus sein, dass sowohl ein Datenpaket erster Ordnung als auch ein Datenpaket zweiter Ordnung bereits in der Steuereinrichtung vorliegt, jedenfalls aber liegt das Datenpaket erster Ordnung vor, welches von der zentralen Verwaltungseinrichtung an die Steuereinrichtung des gesicherten Objekts übertragen wurde. Anschließend wird der erste Datencontainer in der Steuereinrichtung unter Verwendung des ersten Datengeheimnisses aus dem Datenpaket erster Ordnung entschlüsselt. In diesem Datenpaket ist das zweite Datengeheimnis enthalten, womit nun die Signatur des Datenpaketes dritter Ordnung geprüft wird. Ist diese Prüfung der Signatur erfolgreich verlaufen, wird die Identifikationskennung aus dem entschlüsselten ersten Datencontainer geprüft. Diese kann gegen die Identifikationskennung verprobt werden, die in dem Datenpaket erster Ordnung in der Steuereinrichtung des gesicherten Objektes von der zentralen Verwaltungseinheit erhalten wurde.

Schließlich werden die Zugriffsrechte aus der dritten Datenmenge anhand der Zugriffsrechte aus der ersten Datenmenge verifiziert, insbesondere ob die Zugriffsrechte nicht über die delegierbaren Zugriffsrechte gemäß dem Datenpaket erster Ordnung hinausgehen. Ist dies der Fall, werden die Zugriffsrechte aus der dritten Datenmenge als Zugriffsrecht der dritten Kommunikationseinrichtung in der Steuereinrichtung des gesicherten Objektes gespeichert.

Gemäß der vorstehenden Darstellung wird deutlich, dass eine stufenweise Entschlüsselung und Prüfung gemäß der erfindungsgemäßen Verfahren möglich wird, nämlich durch die sukzessive Entschlüsselung der Datencontainer und der Entschlüsselung nachgeordneter Datencontainer aus den Datenpaketen mit den Datengeheimnissen, die in den zuvor entschlüsselten Datencontainer enthalten sind. Diese Kette von Datencontainern erlaubt es, der Steuereinrichtung der gesicherten Einrichtung die Benutzungsrechte zu verifizieren.

Gemäß einem weiteren Aspekt der Erfindung ist vorgesehen, auch die Übertragung des ersten Datenpaketes von der zentralen Verwaltungseinrichtung an die Steuereinrichtung des gesicherten Objektes über die mobilen Kommunikationseinrichtungen zu realisieren.

Dieser Aspekt der Erfindung kommt insbesondere dann zum Tragen, wenn keine Datenübertragung zwischen der zentralen Verwaltungseinrichtung und der Steuereinrichtung des zu sichernden Objektes möglich ist, beispielsweise weil das zu sichernde Objekt zeitweise nicht erreichbar ist. Im Falle eines Fahrzeuges kann dies beispielsweise der Fall sein, wenn das Fahrzeug in einer Tiefgarage parkt.

Gemäß diesem Aspekt der Erfindung wird die Übertragung des ersten Datenpaketes in einem verschlüsselten Datencontainer vorgenommen, der von der zentralen Verwaltungseinrichtung an die erste mobile Kommunikationseinrichtung übertragen wird. Im Unterschied zu dem ersten Aspekt der Erfindung ist dieser Datencontainer im ersten Datenpaket enthalten, jedoch bereits mit einem Schlüssel verschlüsselt, welcher der Steuereinrichtung im gesicherten Objekt zugeordnet ist. Der Inhalt dieses Datencontainers ist entsprechend auch für die erste mobile Kommunikationseinrichtung nicht zu entschlüsseln und damit nicht zugänglich. Stattdessen wird dieser Container durch sämtliche Vererbungsstufen der Rechtedelegation hindurch in die Datenpakete aufgenommen.

Wenn dann ein Datenpaket zweiter oder dritter oder weiterer nachgeordneter Ordnung bei der Steuereinrichtung des gesicherten Objektes von einer mobilen Kommunikationseinrichtung übertragen wird, ist die Steuereinrichtung des gesicherten Objektes in der Lage, mit ihrem gespeicherten spezifischen Schlüssel den Datencontainer zu entschlüsseln und nachfolgend das Verfahren gemäß dem ersten Aspekt der Erfindung durchzuführen. Dieser Aspekt der Erfindung unterscheidet sich also vom ersten Aspekt der Erfindung dadurch, dass keine direkte Übertragung von der zentralen Verwaltungseinrichtung des ersten Datenpaketes an die Steuereinrichtung des gesicherten Objektes erfolgt, sondern diese Datenübertragung zusammen mit den übrigen Datenpaketen realisiert wird, ohne dass auf diesem Wege jemand Zugriff auf den transportierten Datencontainer erhält.

Das Verfahren gemäß dem zweiten Aspekt der Erfindung läuft entsprechend folgendermaßen ab:
Zunächst wird ein Datenpaket erster Ordnung in einer vertrauenswürdigen zentralen Verwaltungseinrichtung erstellt, wobei das Datenpaket erster Ordnung zunächst eine eindeutige erste Identifikationskennung enthält sowie eine erste Datenmenge mit einer Auflistung von Zugriffsrechten auf eine gesicherte Einrichtung. Weiterhin ist in dem Datenpaket erster Ordnung ein erstes Datengeheimnis enthalten, welches zur Verschlüsselung und Entschlüsselung von Daten verwendbar ist.

Dieses Datenpaket erster Ordnung wird in der vertrauenswürdigen zentralen Verwaltungseinrichtung verschlüsselt, wobei zur Verschlüsselung ein für die Steuereinrichtung des gesicherten Objekts spezifisches erstes Objekt-Datengeheimnis verwendet wird. Dieses erste Objekt-Datengeheimnis ist der Steuereinrichtung des gesicherten Objektes zugeordnet, wobei auf dieser Steuereinrichtung wenigstens ein zweites Objekt-Datengeheimnis gespeichert ist, wobei das erste Objekt-Datengeheimnis und das zweite Objekt-Datengeheimnis so aufeinander abgestimmt sind, dass für die Steuereinrichtung des gesicherten Objektes das mit dem ersten Objekt-Datengeheimnis verschlüsselte Datenpaket erster Ordnung unter Verwendung des zweiten Objekt-Datengeheimnisses entschlüsselbar ist.

Grundsätzlich kann bei einer symmetrischen Verschlüsselung eine Identität zwischen erstem Objekt-Datengeheimnis und zweitem Objekt-Datengeheimnis bestehen, es kann sich jedoch auch um eine asymmetrische Verschlüsselung mit unterschiedlichen Datengeheimnissen handeln.

Das unverschlüsselte Datenpaket erster Ordnung wird zusammen mit dem verschlüsselten Datenpaket erster Ordnung an eine mobile Kommunikationseinrichtung übermittelt, die einem Benutzer erster Ordnung zugewiesen ist.

Die erste mobile Kommunikationseinrichtung ist also im Besitz identischer Informationen in verschlüsselter und entschlüsselter Form, wobei sie auf die verschlüsselten Informationen selbst nicht zugreifen kann, da es ihr an dem zweiten Objekt-Datengeheimnis zur Entschlüsselung fehlt. Möchte der Benutzer erster Ordnung Zugriffsrechte auf die gesicherte Einrichtung delegieren, so stellt er ein Datenpaket zweiter Ordnung in der ersten mobilen Kommunikationseinrichtung bereit. Wiederum enthält das Datenpaket zweiter Ordnung eine eindeutige zweite Identifikationskennung sowie erste Referenzdaten, welche auf die Abstammung des Datenpaketes verweisen, insbesondere auf das Datenpaket erster Ordnung. Weiterhin ist eine zweite Datenmenge enthalten, die einer Listung von Zugriffsrechten auf die gesicherte Einrichtung enthält, wobei die zweite Datenmenge eine Teilmenge der ersten Datenmenge ist. Schließlich ist wiederum ein zweites Datengeheimnis enthalten, welches zur Verschlüsselung und Entschlüsselung von Daten verwendbar ist.

Weiterhin enthält das Datenpaket zweiter Ordnung das mit dem ersten Objekt-Datengeheimnis verschlüsselte Datenpaket erster Ordnung. Dieses Datenpaket wird also, unlesbar für alle mobilen Kommunikationseinrichtungen, in das Datenpaket zweiter Ordnung aufgenommen. Schließlich ist auch noch ein mit dem ersten Datengeheimnis verschlüsselter erster Datencontainer enthalten, welcher wenigstens die eindeutige erste Identifikationskennung und das zweite Datengeheimnis erhalten. Das Datenpaket zweiter Ordnung ist unter Verwendung des ersten Datengeheimnisses signiert. Schließlich wird das signierte Datenpaket zweiter Ordnung an eine mobile zweite Kommunikationseinrichtung übermittelt, die einen Benutzer zweiter Ordnung zugeordnet ist, wobei die zweite Kommunikationseinrichtung der ersten Kommunikationseinrichtung hierarchisch nachgeordnet wird.

In der zweiten Kommunikationseinrichtung liegen gemäß diesem Aspekt der Erfindung in dem Datenpaket unterschiedliche Datencontainer vor, wobei einer dieser Datencontainer ausschließlich durch die Steuereinrichtung im gesicherten Objekt lesbar ist. Dieser Container enthält dann wiederum Informationen, die zur Entschlüsselung des weiteren Datencontainers erforderlich sind, der mit dem ersten Datengeheimnis verschlüsselt ist.

Auf diese Weise ist die Weitergabe der Informationen, die für die Steuereinrichtung des gesicherten Objektes erforderlich sind, auch ohne Verbindung zwischen zentraler Verwaltungseinrichtung und Steuereinrichtung des gesicherten Objekts übertragbar.

Tritt ein Benutzer zweiter Ordnung oder dritter Ordnung mit seiner zweiten mobilen Kommunikationseinrichtung bzw. dritten mobilen Kommunikationseinrichtung für den Zugriff an das gesicherte Objekt heran, werden die jeweiligen Datenpakete an die Steuereinrichtung des gesicherten Objektes übertragen. Dann entschlüsselt die Steuereinrichtung des gesicherten Objektes zunächst mit dem gespeicherten zweiten Objekt-Datengeheimnis den Container, der mit dem ersten Objekt-Datengeheimnis verschlüsselt wurde. Ist dies erfolgt, ist die Steuereinrichtung des gesicherten Objektes in ihren Datenbestand in einem Zustand versetzt, wie er gemäß dem ersten Aspekt der Erfindung bei einer Verbindung zwischen zentraler Verwaltungseinrichtung und Steuereinrichtung des gesicherten Objektes vorhanden wäre. Die nachfolgenden Verifikationsstufen entsprechen demnach auch dem vorstehend erläuterten Verfahren.

Die Erfindung wird nun anhand der beiliegenden Zeichnung näher erläutert.
Figur 1 zeigt schematisch die Übermittlungswege und Delegationsabläufe gemäß einem ersten Ausführungsbeispiel der Erfindung;
Figur 2 zeigt die Erstellung und Übermittlung der Datenpakete gemäß dem ersten Ausführungsbeispiel in einer schematischen Ansicht;
Figur 3 zeigt schematisch die Übermittlungswege und Delegationsabläufe gemäß einem zweiten Ausführungsbeispiel der Erfindung;
Figur 4 zeigt die Erstellung und Übermittlung der Datenpakete gemäß dem zweiten Ausführungsbeispiel in einer schematischen Ansicht.

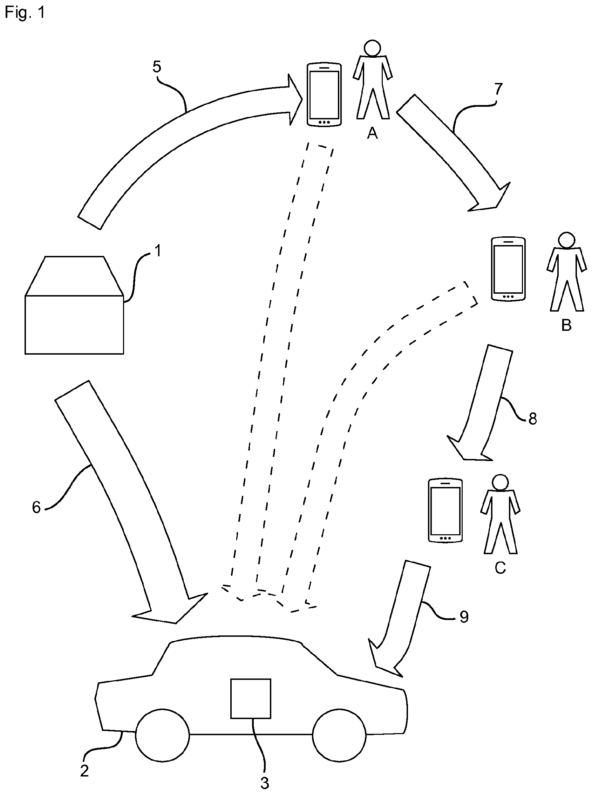

In Figur 1 ist schematisch der Ablauf einer Delegation von Zugriffsrechten mit drei Benutzers dargestellt. Eine zentrale Verwaltungseinrichtung 1 wird durch einen Server gebildet, der mit einem Kommunikationsnetz verbunden ist. Das Kommunikationsnetz kann beispielsweise das Internet sein, welches über leitungsgebundener und drahtlose Netzwerkverbindungen etabliert ist. Die geschützte Einrichtung ist in diesem Beispiel ist ein Fahrzeug 2, in welchem eine Steuereinrichtung 3 angeordnet ist. Die Steuereinrichtung 3 ist mit dem Bordsystem des Fahrzeuges 2 gekoppelt, um den Zugriff auf bestimmte Fahrzeugfunktionen, beispielsweise die Entriegelung von Türen und Klappen oder dem Start des Motors freizugeben oder zu unterbinden. Die Steuereinrichtung 3 kann in Verbindung mit der zentralen Verwaltungseinrichtung 1 treten, beispielsweise über eine drahtlose GSM-Verbindung.

In Figur 1 dargestellt sind außerdem drei Benutzer unterschiedlicher Hierarchieebenen. Der Benutzer A ist ein Benutzer erster Ordnung, der Benutzer B ist ein Benutzer zweiter Ordnung und der Benutzer C ist ein Benutzer dritter Ordnung. Dies bedeutet, dass der Benutzer A dem Benutzer B Rechte zur Nutzung des Fahrzeuges 2 delegiert. Der Benutzer B seinerseits delegiert an den Benutzer C wiederum Rechte zur Benutzung des Fahrzeuges 2. Entsprechend sind die Benutzer B und C dem Benutzer A hierarchisch nachgeordnet, da sie ihre Rechte von der Delegation des Benutzers A ableiten. Der Benutzer C ist beiden Benutzern A und B nachgeordnet, da er seine Rechte aus den Rechten des Benutzers A und den delegierten Rechten des Benutzers B ableitet.

In Figur 1 ist schematisch der Ablauf der Kommunikationswege dargestellt. Gemäß diesem Ausführungsbeispiel wird zunächst ein Datenpaket erster Ordnung in der vertrauenswürdigen zentralen Verwaltungseinrichtung 1 generiert und über den Weg 5 an den Benutzer A übermittelt. Dabei findet die Übermittlung nicht an die Person des Benutzers A sondern an ein von ihm benutztes erstes mobiles Kommunikationsgeräts statt, nämlich in diesem Fall ein Mobiltelefon. Außerdem wird über den Verbindungsweg 6 das erste Datenpaket an das Fahrzeug 2, genauer an dessen Steuereinrichtung 3 übermittelt. Nun sind der Benutzer A über seine erste mobile Kommunikationseinrichtung und die Steuereinrichtung 3 beide im Besitz entsprechender Informationen zu den Zugriffsrechten.

Grundsätzlich könnte nun der Benutzer A zum Zugriff Kontakt mit seiner ersten mobilen Kommunikationseinrichtung mit der Steuereinrichtung 3 des Fahrzeuges aufnehmen, wobei dann die gespeicherten Informationen auf seine erste mobile Kommunikationseinrichtung mit den über den Weg 6 erhaltenen Informationen in dem Steuergerät 3 verglichen würden und die Zugriffsrechte gewährt würden. Ein solcher Vorgang ist im Stand der Technik hinlänglich bekannt. Gemäß der Erfindung ist es dem Benutzer A jedoch möglich, seine Rechte ganz oder teilweise an dem Benutzer B mit seiner zweiten mobilen Kommunikationseinrichtung zu übergeben. Dazu wird der Benutzer A ein Datenpaket erstellen und dieses an die zweite mobile Kommunikationseinrichtung über den Datenweg 7 übermitteln. Der Datenweg 7 kann insbesondere eine Bluetooth-Verbindung zwischen der ersten mobilen Kommunikationseinrichtung des Benutzers A und der zweiten mobilen Kommunikationseinrichtung des Benutzers B sein. Der Benutzer B hätte nun grundsätzlich ebenfalls Zugriff auf das Fahrzeug 2, wie in der vorstehenden Beschreibung dargelegt. In diesem Ausführungsbeispiel nutzt der Benutzer zweiter Ordnung, also der Benutzer B, jedoch die Möglichkeiten zur weiteren Delegation von Teilen seiner Zugriffsrechte an den Benutzer C. Dazu übermittelt der Benutzer B mit seiner zweiten mobilen Kommunikationseinrichtung ein von der zweiten mobilen Kommunikationseinrichtung erstelltes Datenpaket über die Datenverbindung 8 an die dritte mobile Kommunikationseinrichtung des Benutzers C. Der Benutzer C nimmt daraufhin über die Datenverbindung 9, die beispielsweise ebenfalls eine Bluetooth-Verbindung ist, eine Kopplung zwischen seiner dritten mobilen Kommunikationseinrichtung und dem Steuergerät 3 vor und übermittelt das bei ihm vorliegende Datenpaket. Die Steuereinrichtung 3 ist in der Lage, die Ableitung der Rechte des Benutzers C von den Benutzern B und A zu verifizieren, wie im folgenden Bild dargestellt wird. Wesentlich ist, dass die Steuereinrichtung 3 in diesem Ausführungsbeispiel ausschließlich über die Verbindung 6 über die Rechtezuweisung an den Benutzer A informiert ist, nicht jedoch über die Delegation von Rechten von A nach B oder von B nach C.

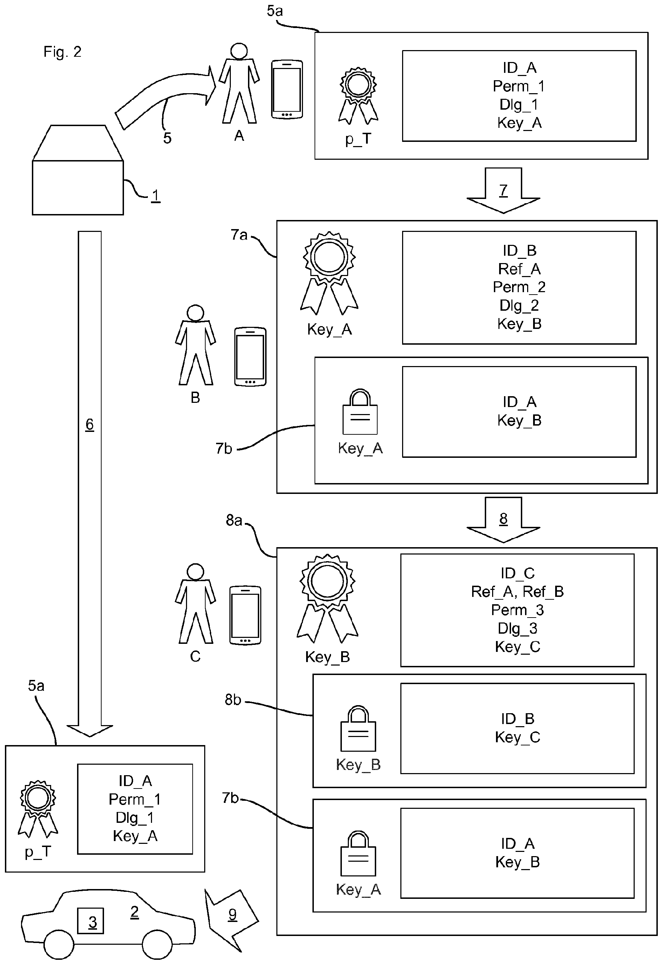

Figur 2 zeigt schematisch den Inhalt der Datenpakete, die in Figur 1 durch Pfeile dargestellt sind.

Das Datenpaket 5a ist ein Datenpaket erster Ordnung und wird in der vertrauenswürdigen zentralen Verwaltungseinrichtung 1 generiert und an die erste mobile Kommunikationseinrichtung des Benutzers A über den Übertragungsweg 5 übermittelt. Dieses Datenpaket 5a ist mit einem Zertifikat p_T durch die vertrauenswürdige zentrale Verwaltungseinrichtung signiert, so dass die erste mobile Kommunikationseinrichtung des Benutzers A Herkunft und Unversehrtheit des Datenpaketes 5a verifizieren kann. Das Datenpaket 5a enthält eine eindeutige erste Identifikationskennung ID_A sowie eine erste Datenmenge Perm_1, welche eine Auflistung von Zugriffsrechten auf das Fahrzeug 2 enthält. Korrespondierend zu der ersten Datenmenge Perm_1 ist außerdem eine Datenmenge mit Delegationsberechtigungen Dlg_1 enthalten. Diese Datenmenge mit Delegationsrechte bestimmt, welche der Zugriffsrechte Perm_1 an nachgeordnete Benutzer delegiert werden dürfen. Auf diese Weise kann die zentrale Verwaltungseinrichtung 1 grundsätzlich die Rechte zur Weitergabe von Benutzungsrechten limitieren. Schließlich enthält das Datenpaket 5a ein erstes Datengeheimnis Key_A. Das Datenpaket 5a wird von der zentralen Verwaltungseinrichtung 1 außerdem an die Steuereinrichtung 3 des Fahrzeuges 2 über den Datenweg 6 übermittelt. Es ist in diesem Zusammenhang zu beachten, dass zwar beide Einheiten, also einerseits die Steuereinrichtung 3 und andererseits die erste mobile Kommunikationseinrichtung des Benutzers A dieselben Nutzdaten erhalten, diese jedoch durchaus in unterschiedlichen größeren Dateneinheiten eingeschlossen sein können. Beispielsweis kann die Übermittlung auf dem Wege 5 im Rahmen einer periodischen, beispielsweise mehrmals täglich stattfindenden Update-Informationen der zentralen Verwaltungseinrichtung 1 zu der Steuereinrichtung 3 übermittelt werden.

Der Benutzer A ist nun mit dem Datenpaket 5a auf seiner ersten mobilen Kommunikationseinrichtung grundsätzlich in der Lage, auf das Fahrzeug 2 zuzugreifen. Dies ist jedoch nicht Gegenstand der Erfindung, da es einem Zugriff gemäß dem Stand der Technik entspricht.

Gemäß der Erfindung delegiert der Benutzer A Teile seiner Rechte an den Benutzer B. Dafür wird in der ersten mobilen Kommunikationseinrichtung ein Datenpaket 7a generiert und an den Benutzer B übermittelt, genauer an seine zweite mobile Kommunikationseinrichtung. Das in der ersten mobilen Kommunikationseinrichtung generierte Datenpaket 7a enthält eine eindeutige zweite Identifikationskennung ID_B sowie eine Referenz Ref_A auf das Datenpaket 5a. Die Referenz zeigt an, aus welchem Datenpaket die Rechtedelegation abgeleitet wurde. Außerdem ist eine zweite Datenmenge Perm_2 mit zugeordneten Delegationsbeschränkungen Dlg_2 im Datenpaket 7a enthalten, welche anzeigt, welche Zugriffsrechte der Benutzer B im Besitz des Datenpakets 7a auf das Fahrzeug 2 haben soll. Schließlich ist ein zweites Datengeheimnis Key_B beigefügt welches erforderlich ist, wenn der Benutzer B seiner Rechte weiter delegieren möchte.

Außerdem enthält das Datenpaket 7a ein Datencontainer 7b, welcher mit dem Datengeheimnis Key_A verschlüsselt ist. Der Datencontainer 7b ist also für das zweite mobile Kommunikationsgerät des Benutzers B nicht lesbar, da dieses nicht über den Schlüssel Key_A verfügt. In dem verschlüsselten Datencontainer 7b ist die eindeutige Identifikationskennung des ersten Datenpakets 5a ID_A enthalten sowie das zweite Datengeheimnis Key_B. Das gesamte Datenpaket 7a ist mit dem Datengeheimnis Key_A signiert.

Der Benutzer B möchte nun wiederum Teile seiner Zugriffsrechte auf das Fahrzeug 2 an einen Benutzer C delegieren. Dazu erzeugt der Benutzer B mit seiner zweiten mobilen Kommunikationseinrichtung ein Datenpaket 8a und überträgt dieses über die Datenverbindung 8 an ein drittes mobiles Kommunikationsgerät des Benutzers C. Das Datenpakte 8a enthält eine eindeutige dritte Identifikationskennung ID_C sowie Referenzen sowohl auf das erste Datenpaket 5a als auch auf das zweite Datenpaket 7a. Damit zeigen die Referenzdaten die Ableitung der Rechte in Gestalt einer hierarchischen Listenfolge an. Weiterhin sind in einer dritten Datenmenge Perm_3 Zugriffsrechte des Benutzers C auf das Fahrzeug 2 definiert sowie den Zugriffsrechten zugeordnete Delegationsberechtigungen Dlg_3 und ein Datengeheimnis Key_C.

Das Datenpaket 8a enthält außerdem den Datencontainer 7b, den er weitgehend unverändert aus dem Datenpaket 7a übernimmt sowie einen neuen Datencontainer 8b, welcher mit dem zweiten Datengeheimnis Key_B verschlüsselt ist und der die zweite Identifikationskennung ID_B sowie das Datengeheimnis Key_C enthält. Das gesamte Datenpaket 8a ist mit dem zweiten Datengeheimnis Key_B signiert.

In diesem Ausführungsbeispiel tritt nun der Benutzer C mit seiner dritten mobilen Kommunikationseinrichtung an das Fahrzeug 2 heran und überträgt über die Datenverbindung 9 das Datenpaket 8a an die Steuereinrichtung 3.

Die Steuereinrichtung 3 ist in Besitz des Datenpaketes 5a, das zuvor von der zentralen Verwaltungseinrichtung über die Datenverbindung 6 übermittelt wurde. Die Steuereinrichtung 3 ist zunächst nicht in der Lage, die Signatur des Datenpaketes 8a zu verifizieren, da sie nicht im Besitz des zweiten Datengeheimnisses Key_B ist. Das erste Datengeheimnis Key_A liegt jedoch in der Steuereinrichtung 3 vor. Da die in Figur 2 im Datenpaket 8a oben dargestellten Daten zwar signiert, nicht jedoch verschlüsselt sind, kann die Steuereinrichtung 3 die Referenzen Ref_A und Ref_B auslesen. Die Steuereinrichtung 3 ruft entsprechend die Inhalte des Datenpaketes 5a auf, da dieses durch die Referenzinformation Ref_A eindeutig referenziert ist. Dann nutzt die Steuereinrichtung 3 die Information des ersten Datengeheimnisses Key_A aus dem referenzierten Datenpaket 5a um den Datencontainer 7b zu entschlüsseln. Daraufhin kann verifiziert werden, ob die eindeutige Kennung in dem verschlüsselten Datenpaket der eindeutigen Kennung des Datenpaktes 5a, ID_A entspricht. Ist dies der Fall, kann das zweite Datengeheimnis Key_B aus dem Datencontainer 7a verwendet werden, um den Datencontainer 8b zu entschlüsseln. Wiederum kann geprüft werden, ob die eindeutige Kennung ID_B mit dem Referenzwert Ref_B zum gleichen Datenpaket verweist. Außerdem kann die Signatur des Datenpaketes 8a mit dem Datengeheimnis Key_B verifiziert werden.

Da auf diese Weise eine Kette von vertrauenswürdigen Verschlüsselungen etabliert wurde, vertraut daraufhin die Steuereinrichtung 3 dem Inhalt des Datenpaketes 8a und trägt die Zugriffsrechte Perm_3 als Zugriffsrechte des Benutzers C mit seiner dritten mobilen Kommunikationseinrichtung ein. Dies geht jedoch nur insoweit, als die Zugriffsrechte konsistent mit der erlaubten Delegation von Zugriffsrechten sind, die in der Delegationsliste Dlg_1 stehen.

Angesichts dieser Darstellung wird deutlich, dass in jeder Stufe der Rechtedelegation ein verschlüsselter Container hinzugefügt wird, dessen Inhalt ein hierarchisch niedrigerer Benutzer nicht einsehen oder ändern kann, wobei dieser Container jedoch zur Verifikation der Rechte durch die Steuereinrichtung 3 herangezogen wird. Die Signaturen der gesamten Datenpakete sind dabei nur erfolgreich durch die Steuereinrichtung 3 zu verifizieren, wenn einer der Datencontainer, welcher den Ursprung der Rechtehierarchie darstellt, durch die Daten der Steuereinrichtung 3 zu entschlüsseln ist, die diese von der zentralen vertrauenswürdigen Verwaltungseinrichtung 1 erhalten hat.

Es wird außerdem deutlich, dass die Rechteerteilung des Benutzers A an den Benutzer B und von Benutzer B an den Benutzer C ohne Mitwirkung der zentralen Verwaltungseinrichtung 1 erfolgt und ebenfalls ohne Mitwirkung der Steuereinrichtung 3.

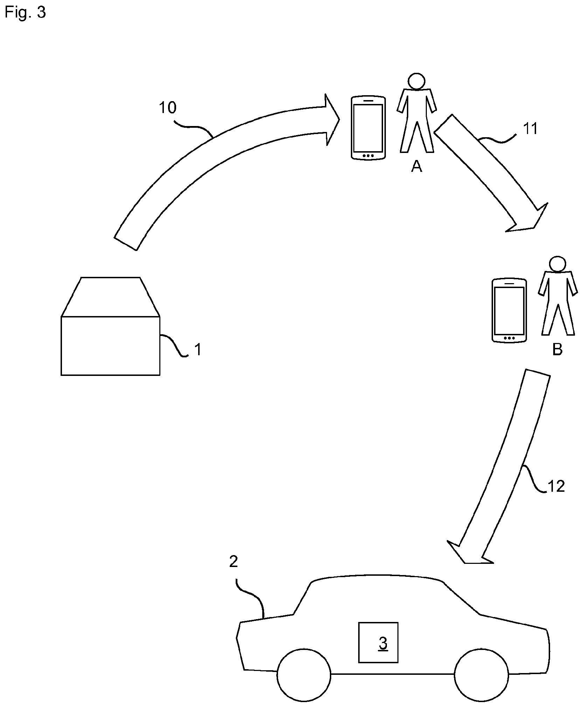

Figur 3 zeigt eine Ausführungsform der Erfindung gemäß einem zweiten Ausführungsbeispiel und Aspekt der Erfindung. In diesem Schema ist ersichtlich, dass die Rechtedelegation nur von einem Benutzer auf einen anderen Benutzer erfolgt, wobei hier jedoch keine Datenverbindung zwischen der zentralen vertrauenswürdigen Verwaltungseinrichtung 1 und dem Fahrzeug 2 mit seiner Steuereinrichtung 3 besteht. Das Fahrzeug 2 befindet sich beispielswiese in einer Tiefgarage und kann keinen Zugriff auf die Kommunikationsnetze nehmen.

In diesem Beispiel wird ein Datenpaket von der zentralen Verwaltungseinrichtung 1 über den Datenübertragungsweg 10 an die erste mobile Kommunikationseinrichtung des Benutzers A übermittelt. Der Benutzer A delegiert über den Datenübertragungsweg 11 von seiner ersten mobilen Kommunikationseinrichtung Benutzungsrechte an den Benutzer B und dessen zweite mobile Kommunikationseinrichtung. Der Benutzer B greift danach mit einer zweiten mobilen Kommunikationseinrichtung über den Datenweg 12 auf die Steuereinrichtung 3 des Fahrzeuges 2 zu.

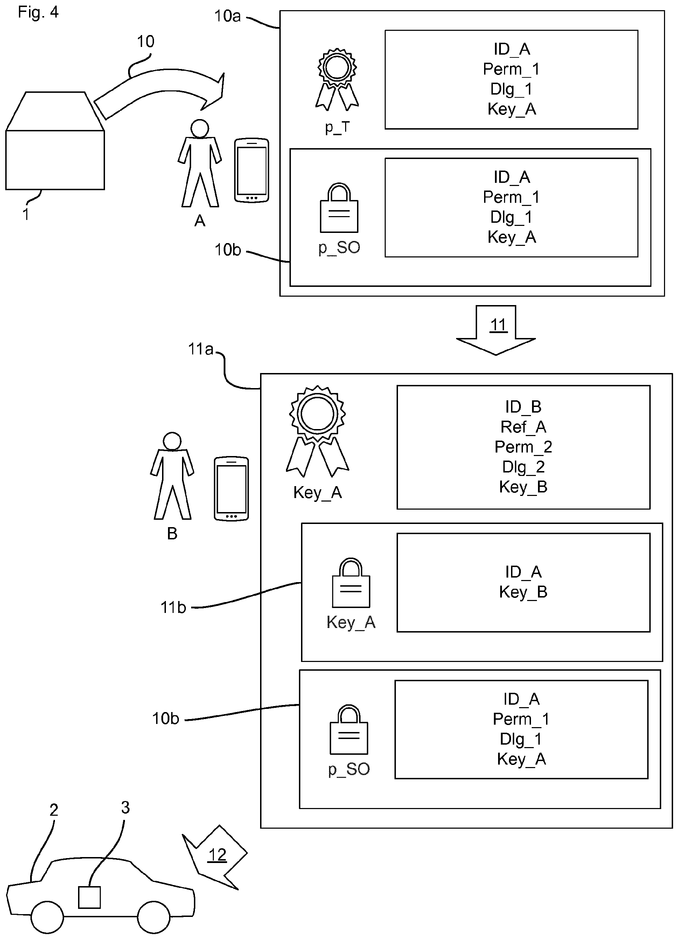

In Figur 4 sind die Paketinhalte des Ausführungsbeispiels gemäß dem zweiten Aspekt der Erfindung dargestellt.

Wie im ersten Ausführungsbeispiel, dort insbesondere Figur 2, erhält der Benutzer A mit seiner ersten mobilen Kommunikationseinrichtung über den Datenweg 10 von der zentralen Verwaltungseinrichtung 1 ein Datenpaket 10a. Dieses enthält einerseits eine Datenmenge wie im voran beschriebenen Ausführungsbeispiel, nämlich enthaltend eine eindeutige erste Identifikationskennung ID_A, eine erste Liste von Zugriffsrechten Perm_1 sowie dazugehörige Delegationsberechtigungen Dlg_1 und ein erstes Datengeheimnis Key_A. Diese Informationen sind mit einer Signatur p_T der vertrauenswürdigen zentralen Verwaltungseinrichtung 1 versehen.

Zusätzlich zum vorangehenden Ausführungsbeispiel ist jedoch ein verschlüsselter Datencontainer 10b in dem Datenpaket 10a enthalten. Dieser verschlüsselte Datencontainer 10b ist unlesbar für die erste mobile Kommunikationseinrichtung des Benutzers A mit einem ersten Objekt-Datengeheimnis p_So verschlüsselt, welcher auf die Steuereinrichtung 3 des Fahrzeuges 2 abgestimmt ist. Dieser Schlüssel ist beispielsweise ein Schlüssel, der in der Steuereinrichtung 3 hinterlegt ist und der vertrauenswürdigen zentralen Verwaltungseinrichtung 1 bekannt ist, nicht jedoch der ersten mobilen Kommunikationseinrichtung. Dieser Datencontainer 10b dient dazu, der Steuereinrichtung 3 den Inhalt des Datenpaketes zur Verfügung zu stellen, wenn keine unmittelbare Verbindung zwischen der zentralen Verwaltungseinrichtung 1 und der Steuereinrichtung 3 möglich ist. Der im ersten Ausführungsbeispiel dargestellte Datenweg 5 steht hier entsprechend nicht zur Verfügung, so dass der Inhalt des Datenpaktes für die Steuereinrichtung 3 verschlüsselt in das Datenpaket 10a integriert wird. Über den Datenweg 11, beispielsweise eine Bluetooth-Verbindung, kann der Benutzer A mit seiner ersten mobilen Kommunikationseinrichtung dem Benutzer B Zugriffsrechte auf das Fahrzeug 2 einräumen. Dazu wird das Datenpaket 11a erstellt, welches von der ersten mobilen Kommunikationseinrichtung generierte Werte enthält. Insbesondere ist eine eindeutige zweite Identifikationskennung ID_B enthalten. Außerdem ist eine Referenz Ref_A auf das erste Datenpaket 10a vorhanden. Weiterhin ist wiederum eine Liste von Zugriffsberechtigungen Perm_2 sowie zugehörigen Delegationsrechten Dlg_2 enthalten und ein zweites Datengeheimnis Key_B. Der mit dem ersten Objekt-Datengeheimnis p_SO verschlüsselte Datencontainer 10b ist im Datenpaket 11a ebenfalls enthalten sowie ein Datencontainer 11b, der mit dem ersten Datengeheimnis Key_A verschlüsselt ist und die eindeutige erste Identifikationskennung ID_A enthält sowie das zweite Datengeheimnis Key_B. Das gesamte Datenpaket 11a ist mit dem erste Datengeheimnis Key_A signiert.

Der Benutzer B tritt nun mit seiner zweiten mobilen Kommunikationseinrichtung in eine Kommunikationsverbindung 12 mit der Steuereinrichtung 3. Die Steuereinrichtung 3 ist zu diesem Zeitpunkt gänzlich in Unkenntnis über die Delegation der Rechte sowie auch die überhaupt vorhandenen Zugriffsrechte des Benutzers A, da das Datenpaket 10a hier noch nicht empfangen wurde. Die Steuereinrichtung 3 analysiert nun die Inhalte des Datenpaktes 10a. Dazu wird mit dem in der Steuereinrichtung 3 bereits vorhandenen zweiten Objekt-Datengeheimnis, welches den Schlüssel p_So enthält, der Datencontainer 10b entschlüsselt. Ist dies erfolgreich, verfügt die Steuereinrichtung 3 über den Inhalt des Datenpaketes 10a und kann nun den Rest der Informationen so verarbeiten, wie dies im vorangehenden Ausführungsbeispiel dargelegt wurde. Die Steuereinrichtung 3 ist nämlich jetzt durch den Containertransport in der Lage, die Rechte des Benutzers A zu speichern. Doch durch das gespeicherte und aus dem Datencontainer 10b entschlüsselte erste Datengeheimnis Key_A ist es auch möglich, den zweiten Container 11b zu entschlüsseln sowie die Signatur des Datenpaketes 11a zu prüfen. Im vorstehenden Beispiel kann daraufhin in der Steuereinrichtung 3 die Delegation der Rechte von Benutzer A an Benutzer B geprüft werden und dem Benutzer B können die entsprechenden Zugriffsrechte eingeräumt werden.

Es ist ersichtlich, dass sowohl bei der Ausführungsform gemäß den Figuren 1 und 2 als auch der Ausführungsform gemäß den Figuren 3 und 4 noch beliebige weitere Hierarchiestufen folgen können, wobei dann jeweils verschlüsselte Datencontainer mit unterschiedlichen Datengeheimnissen angefügt werden. Zur Übersichtlichkeit wurde die Darstellung in diesem Fall jedoch auf drei Benutzer bzw. zwei Benutzer beschränkt.

## Patentansprüche

1. Verfahren zur Delegation von Zugriffsrechten auf ein gesichertes Objekt (2), mit den Schritten:
Bereitstellen eines Datenpakets erster Ordnung (5a) in einer vertrauenswürdigen zentralen Verwaltungseinrichtung (1), wobei das Datenpaket erster Ordnung (5a) wenigstens enthält:
- eine eindeutige erste Identifikationskennung (ID_A),
- eine erste Datenmenge (Perm_1) mit einer Auflistung von Zugriffsrechten auf eine gesicherte Einrichtung,
- ein erstes Datengeheimnis (Key_A), welches zur Verschlüsselung und Entschlüsselung von Daten verwendbar ist,
Übermitteln (5) des Datenpakets erster Ordnung (5a) an eine erste mobile Kommunikationseinrichtung (A), die einem Benutzer erster Ordnung zugewiesen ist,
Übermitteln (6) des Datenpakets erster Ordnung (5a) von der zentralen Verwaltungseinrichtung (1) an eine Steuereinrichtung (3) der gesicherten Einrichtung (2) und Speichern des Datenpakets erster Ordnung in der Steuereinrichtung (3),
Bereitstellen eines Datenpakets zweiter Ordnung (7a) in der ersten mobilen Kommunikationseinrichtung (A), wobei das Datenpaket zweiter Ordnung (7a) wenigstens enthält:
- eine eindeutige zweite Identifikationskennung (ID_B),
- erste Referenzdaten (Ref_A), welche eine Referenz auf das Datenpaket erster Ordnung enthalten,
- eine zweite Datenmenge (Perm_2) mit einer Auflistung von Zugriffsrechten auf die gesicherte Einrichtung, wobei die zweite Datenmenge eine Teilmenge der ersten Datenmenge ist,
- ein zweites Datengeheimnis (Key_B), welches zur Verschlüsselung und Entschlüsselung von Daten verwendbar ist,
- ein mit dem ersten Datengeheimnis (Key_A) verschlüsselter erster Datencontainer (7b), welcher wenigstens die eindeutige erste Identifikationskennung (ID_A) und das zweite Datengeheimnis (Key_B) enthält, Signieren des Datenpakets zweiter Ordnung (7a) unter Verwendung des ersten Datengeheimnisses (Key_A),
Übermitteln (7) des signierten Datenpakets zweiter Ordnung (7a) an eine mobile zweite Kommunikationseinrichtung (B), die einem Benutzer zweiter Ordnung zugeordnet ist, wobei die zweite Kommunikationseinrichtung der ersten Kommunikationseinrichtung hierarchisch nachgeordnet wird.

2. Verfahren nach Anspruch 1, wobei die erste Datenmenge mit einer Auflistung von Zugriffsrechten, den Zugriffsinformationen zugeordnete Delegationsberechtigungen enthält, welche anzeigen, welche der aufgelisteten Zugriffsrechte an hierarchisch nachgeordnete Kommunikationseinrichtungen delegierbar sind.

3. Verfahren nach Anspruch 1 oder 2, wobei das erste Datengeheimnis und/oder das zweite Datengeheimnis jeweils mehrere Komponenten aufweisen, so dass für die Verschlüsselung unter Verwendung jedes Datengeheimnisses eine andere Komponente des Datengeheimnisses verwendbar ist als für die Signatur unter Verwendung des jeweiligen Datengeheimnisses.

4. Verfahren nach einem der vorangehenden Ansprüche, mit den weiteren Schritten:
Bereitstellen eines Datenpakets dritter Ordnung (8a) in der zweiten mobilen Kommunikationseinrichtung, wobei das Datenpaket dritter Ordnung (8a) wenigstens enthält:
- eine eindeutige dritte Identifikationskennung (ID_C),
- zweite Referenzdaten (Ref_a, Ref_B), welche eine Referenz wenigstens auf eines der Datenpakete erster Ordnung und/oder zweiter Ordnung enthalten,
- eine dritte Datenmenge (Perm_3) mit einer Auflistung von Zugriffsrechten auf eine gesicherte Einrichtung, wobei die dritte Datenmenge eine Teilmenge der zweiten Datenmenge (Perm_2) ist,
- den mit dem ersten Datengeheimnis verschlüsselten ersten Datencontainer (7b),
- einen mit dem zweiten Datengeheimnis verschlüsselter zweiten Datencontainer (8b), welcher wenigstens die eindeutige zweite Identifikationskennung (ID_B) enthält,
Signieren des Datenpakets dritter Ordnung unter Verwendung des zweiten Datengeheimnisses (Key_B),
Übermitteln des signierten Datenpakets dritter Ordnung (8a) an eine dritte mobile Kommunikationseinrichtung (C), die einem dem Benutzer zweiter Ordnung nachgeordneten Benutzer dritter Ordnung zugeordnet ist.

5. Verfahren nach einem der vorangehenden Ansprüche, mit den Schritten
Übertragen des Datenpakets zweiter Ordnung (8a) von der zweiten mobilen Kommunikationseinrichtung an die Steuereinrichtung (3) der gesicherten Einrichtung (2),
Auslesen der ersten Referenzdaten und Aufrufen der Inhalte des durch die ersten Referenzdaten referenzierten und in der Steuereinrichtung gespeicherten Datenpakets erster Ordnung (5a),
Verifizieren der Signatur des Datenpakets zweiter Ordnung (7a) unter Verwendung des ersten Datengeheimnisses,
Entschlüsseln des ersten Datencontainers (7b) in der Steuereinrichtung (3) unter Verwendung des ersten Datengeheimnisses (Key_A) aus dem Datenpaket erster Ordnung (5a),
Verifizieren der ersten Identifikationskennung (ID_A) aus dem entschlüsselten ersten Datencontainer (7b) anhand der Identifikationskennung aus dem in der Steuereinrichtung (3) gespeicherten Datenpaket erster Ordnung (5a),
Verifizieren der Zugriffsrechte aus der zweiten Datenmenge (Perm_2) anhand der Zugriffsrechte aus der ersten Datenmenge (Perm_1),
Registrieren der Zugriffsrechte aus der zweiten Datenmenge (Perm_2) als Zugriffsrechte der zweiten Kommunikationseinrichtung, sofern alle Verifikationen erfolgreich waren.

6. Verfahren nach einem der Ansprüche 1 bis 5, mit den Schritten
Übertragen (9) des Datenpakets dritter Ordnung (8a) von der dritten mobilen Kommunikationseinrichtung an die Steuereinrichtung (3) der gesicherten Einrichtung,
Auslesen der zweiten Referenzdaten (Ref_B) und Aufrufen der Inhalte des durch die zweiten Referenzdaten referenzierten und in der Steuereinrichtung gespeicherten Datenpakets erster Ordnung (5a),
Entschlüsseln des ersten Datencontainers (7b) in der Steuereinrichtung unter Verwendung des ersten Datengeheimnisses aus dem Datenpaket erster Ordnung (5a),
Verifizieren der Signatur des Datenpakets dritter Ordnung (8a) unter Verwendung des zweiten Datengeheimnisses (Key_B) aus dem entschlüsselten ersten Datencontainer (7b),
Verifizieren der ersten Identifikationskennung (ID_A) aus dem entschlüsselten ersten Datencontainer anhand der Identifikationskennung aus dem in der Steuereinrichtung (3) gespeicherten Datenpaket erster Ordnung (5a),
Verifizieren der Zugriffsrechte aus der dritten Datenmenge (Perm_3) anhand der Zugriffsrechte aus der ersten Datenmenge (Perm_1),
Registrieren der Zugriffsrechte aus der dritten Datenmenge als Zugriffsrechte der dritten Kommunikationseinrichtung, sofern alle Verifikationen erfolgreich waren.

7. Verfahren zur Delegation von Zugriffsrechten auf ein gesichertes Objekt (2), mit den Schritten:
Bereitstellen eines Datenpakets erster Ordnung (10a) in einer vertrauenswürdigen zentralen Verwaltungseinrichtung (1), wobei das Datenpaket erster Ordnung wenigstens enthält:
- eine eindeutige erste Identifikationskennung (ID_A),
- eine erste Datenmenge (Perm_1) mit einer Auflistung von Zugriffsrechten auf eine gesicherte Einrichtung,
- ein erstes Datengeheimnis (Key_A), welches zur Verschlüsselung und Entschlüsselung von Daten verwendbar ist,
Verschlüsseln des Datenpakets erster Ordnung in der vertrauenswürdigen zentralen Verwaltungseinrichtung (1), wobei zur Verschlüsselung ein für das gesicherte Objekt (2) spezifisches erstes Objekt-Datengeheimnis (p_SO) verwendet wird, welches auf ein in der Steuereinrichtung (3) des gesicherten Objekts gespeichertes zweites Objekt-Datengeheimnis derart abgestimmt ist, dass für die Steuereinrichtung (3) des gesicherten Objektes (2) das mit dem ersten Objekt-Datengeheimnis verschlüsselte Datenpaket erster Ordnung entschlüsselbar ist,
Übermitteln (10) sowohl des unverschlüsselten Datenpakets erster Ordnung als auch des mit dem ersten Objekt-Datengeheimnis verschlüsselten Datenpaket erster Ordnung (10b) an eine erste mobile Kommunikationseinrichtung (A), die einem Benutzer erster Ordnung zugewiesen ist,
Bereitstellen eines Datenpakets zweiter Ordnung (11a) in der ersten mobilen Kommunikationseinrichtung, wobei das Datenpaket zweiter Ordnung wenigstens enthält:
- eine eindeutige zweite Identifikationskennung (ID_B),
- erste Referenzdaten (Ref_A), welche eine Referenz auf das Datenpaket erster Ordnung enthalten,
- eine zweite Datenmenge (Perm_2) mit einer Auflistung von Zugriffsrechten auf die gesicherte Einrichtung, wobei die zweite Datenmenge eine Teilmenge der ersten Datenmenge ist,
- ein zweites Datengeheimnis (Key_B), welches zur Verschlüsselung und Entschlüsselung von Daten verwendbar ist,
- das mit dem ersten Objekt-Datengeheimnis verschlüsselte Datenpaket erster Ordnung (10b),
- ein mit dem ersten Datengeheimnis (Key_A) verschlüsselter erster Datencontainer (11b), welcher wenigstens die eindeutige erste Identifikationskennung (ID_A) und das zweite Datengeheimnis (Key_B) enthält, Signieren des Datenpakets zweiter Ordnung (11a) unter Verwendung des ersten Datengeheimnisses (Key_A),
Übermitteln (11) des signierten Datenpakets zweiter Ordnung (11a) an eine mobile zweite Kommunikationseinrichtung (B), die einem Benutzer zweiter Ordnung zugeordnet ist, wobei die zweite Kommunikationseinrichtung (B) der ersten Kommunikationseinrichtung (A) hierarchisch nachgeordnet wird.

8. Verfahren nach Anspruch 7, wobei die erste Datenmenge mit einer Auflistung von Zugriffsrechten, den Zugriffsinformationen zugeordnete Delegationsberechtigungen enthält, welche anzeigen, welche der aufgelisteten Zugriffsrechte an hierarchisch nachgeordnete Kommunikationseinrichtungen delegierbar sind.

9. Verfahren nach Anspruch 7 oder 8, wobei das erste Datengeheimnis und/oder das zweite Datengeheimnis jeweils mehrere Komponenten aufweisen, so dass für die Verschlüsselung unter Verwendung jedes Datengeheimnisses eine andere Komponente des Datengeheimnisses verwendbar ist als für die Signatur unter Verwendung des jeweiligen Datengeheimnisses.

10. Verfahren nach einem der Ansprüche 7 bis 9, mit den weiteren Schritten:
Bereitstellen eines Datenpakets dritter Ordnung in der zweiten mobilen Kommunikationseinrichtung, wobei das Datenpaket dritter Ordnung wenigstens enthält:
- eine eindeutige dritte Identifikationskennung,
- zweite Referenzdaten, welche eine Referenz wenigstens auf eines der Datenpakete erster Ordnung und/oder zweiter Ordnung enthalten,
- eine dritte Datenmenge mit einer Auflistung von Zugriffsrechten auf eine gesicherte Einrichtung, wobei die dritte Datenmenge eine Teilmenge der zweiten Datenmenge ist,
- das mit dem ersten Objekt-Datengeheimnis verschlüsselten Datenpaket erster Ordnung,
- den mit dem ersten Datengeheimnis verschlüsselten ersten Datencontainer,
- einen mit dem zweiten Datengeheimnis verschlüsselter zweiten Datencontainer, welcher wenigstens die eindeutige zweite Identifikationskennung enthält,
Signieren des Datenpakets dritter Ordnung unter Verwendung des zweiten Datengeheimnisses,
Übermitteln des signierten Datenpakets dritter Ordnung an eine mobile dritte Kommunikationseinrichtung, die einem dem Benutzer zweiter Ordnung nachgeordneten Benutzer dritter Ordnung zugeordnet ist.

11. Verfahren nach einem der Ansprüche 7 bis 10, mit den Schritten
Übertragen (12) des Datenpakets zweiter Ordnung (11a) von der zweiten Kommunikationseinrichtung (B) an die Steuereinrichtung (3) der gesicherten Einrichtung (2),
Entschlüsseln des mit dem ersten Objekt-Datengeheimnis verschlüsselten Datenpakets erster Ordnung (10b) in der Steuereinrichtung (3) unter Verwendung des zweiten Objekt-Datengeheimnisses,
Verifizieren der Signatur des Datenpakets zweiter Ordnung (11a) unter Verwendung des ersten Datengeheimnisses,
Entschlüsseln des ersten Datencontainers (11b) in der Steuereinrichtung unter Verwendung des ersten Datengeheimnisses aus dem Datenpaket erster Ordnung,
Verifizieren der ersten Identifikationskennung aus dem entschlüsselten ersten Datencontainer anhand der Identifikationskennung aus dem in der Steuereinrichtung gespeicherten Datenpaket erster Ordnung,
Verifizieren der Zugriffsrechte aus der zweiten Datenmenge anhand der Zugriffsrechte aus der ersten Datenmenge,
Registrieren der Zugriffsrechte aus der zweiten Datenmenge als Zugriffsrechte der zweiten Kommunikationseinrichtung, sofern alle Verifikationen erfolgreich waren.

12. Verfahren nach einem der Ansprüche 7 bis 10, mit den Schritten
Übertragen des Datenpakets dritter Ordnung von der dritten Kommunikationseinrichtung an die Steuereinrichtung der gesicherten Einrichtung,
Entschlüsseln des mit dem ersten Objekt-Datengeheimnis verschlüsselten Datenpakets erster Ordnung in der Steuereinrichtung unter Verwendung des zweiten Objekt-Datengeheimnisses,
Entschlüsseln des ersten Datencontainers in der Steuereinrichtung unter Verwendung des ersten Datengeheimnisses aus dem Datenpaket erster Ordnung,
Verifizieren der Signatur des Datenpakets dritter Ordnung unter Verwendung des zweiten Datengeheimnisses aus dem entschlüsselten ersten Datencontainer,
Verifizieren der ersten Identifikationskennung aus dem entschlüsselten ersten Datencontainer anhand der Identifikationskennung aus dem in der Steuereinrichtung gespeicherten Datenpaket erster Ordnung,
Verifizieren der Zugriffsrechte aus der dritten Datenmenge anhand der Zugriffsrechte aus der ersten Datenmenge,
Registrieren der Zugriffsrechte aus der dritten Datenmenge als Zugriffsrechte der dritten Kommunikationseinrichtung, sofern alle Verifikationen erfolgreich waren.

## Claims

1. A method for delegating access rights to a secured object (2), comprising the steps of:
Providing a first order data packet (5a) in a trusted central management device (1), the first order data packet (5a) containing at least:
- a unique first identification identifier (ID_A),
- a first data set (Perm_1) containing a list of access rights to a secured resource,
- a first data secret (Key_A) usable for encryption and decryption of data,
transmitting (5) the first order data packet (5a) to a first mobile communication device (A) assigned to a first order user,
transmitting (6) the first order data packet (5a) from the central management device (1) to a control device (3) of the secured device (2) and storing the first order data packet in the control device (3),
providing a second order data packet (7a) in said first mobile communication device (A), said second order data packet (7a) comprising at least
- a unique second identification identifier (ID_B),
- a first reference data (Ref_A) containing a reference to the first order data packet
- a second data set (Perm_2) containing a listing of access rights to the secured device, the second data set being a subset of the first data set
- a second data secret (Key_B) usable for encryption and decryption of data,
- a first data container (7b) encrypted with the first data secret (Key_A) and containing at least the unique first identification identifier (ID_A) and the second data secret (Key_B),
signing the second order data packet (7a) using the first data secret (Key_A),
transmitting (7) the signed second-order data packet (7a) to a mobile second communication device (B) which is assigned to a second-order user, the second communication device being hierarchically subordinate to the first communication device.

2. Method according to claim 1, wherein the first data set with a listing of access rights contains delegation authorisations associated with the access information indicating which of the listed access rights are delegable to hierarchically subordinate communication devices.

3. Method according to claim 1 or 2, wherein the first data secret and/or the second data secret each comprise several components, so that a different component of the data secret can be used for the encryption using each data secret than for the signature using the respective data secret.

4. Method according to any one of the preceding claims, comprising the further steps of:
Providing a third order data packet (8a) in the second mobile communication device, wherein the third order data packet (8a) comprises at least:
- a unique third identification identifier (ID_C),
- second reference data (Ref_a, Ref_B) containing a reference to at least one of the first-order and/or second-order data packets
- a third data set (Perm_3) containing a listing of access rights to a secured device, the third data set being a subset of the second data set (Perm_2)
- the first data container (7b) encrypted with the first data secret,
- a second data container (8b) encrypted with the second data secret and containing at least the unique second identification identifier (ID_B),
signing the third order data packet using the second data secret (Key_B),
transmitting the signed third-order data packet (8a) to a third mobile communication device (C) which is assigned to a third-order user subordinate to the second-order user.

5. Method according to one of the preceding claims, comprising the steps of
Transmitting the second-order data packet (8a) from the second mobile communication device to the control device (3) of the secured device (2),
reading out the first reference data and retrieving the contents of the first order data packet (5a) referenced by the first reference data and stored in the control device,
verifying the signature of the second order data packet (7a) using the first data secret,
decrypting the first data container (7b) in the control device (3) using the first data secret (Key_A) from the first order data packet (5a),
verifying the first identification key (ID_A) from the decrypted first data container (7b) using the identification key from the first order data packet (5a) stored in the control device (3),
verifying the access rights from the second data set (Perm_2) on the basis of the access rights from the first data set (Perm_1),
registering the access rights from the second data set (Perm_2) as access rights of the second communication device, provided that all verifications were successful.

6. Method according to any one of claims 1 to 5, comprising the steps of
Transmitting (9) the third order data packet (8a) from the third mobile communication device to the control device (3) of the secured device,
reading out the second reference data (Ref_B) and calling up the contents of the first-order data packet (5a) referenced by the second reference data and stored in the control device,
decrypting the first data container (7b) in the control device using the first data secret from the first order data packet (5a),
verifying the signature of the third order data packet (8a) using the second data secret (Key_B) from the decrypted first data container (7b),
verifying the first identification identifier (ID_A) from the decrypted first data container using the identification identifier from the first order data packet (5a) stored in the control device (3),
verifying the access rights from the third data set (Perm_3) on the basis of the access rights from the first data set (Perm_1),
registering the access rights from the third data set as access rights of the third communication device, provided all verifications were successful.

7. Method for delegating access rights to a secured object (2), comprising the steps of:
Providing a first order data packet (10a) in a trusted central management facility (1), the first order data packet containing at least:
- a unique first identification identifier (ID_A),
- a first data set (Perm_1) containing a list of access rights to a trusted facility
- a first data secret (Key_A) usable for encryption and decryption of data,
encrypting the first-order data packet in the trusted central management device (1), a first object data secret (p_SO) specific to the secured object (2) being used for the encryption, which first object data secret is matched to a second object data secret stored in the control device (3) of the secured object in such a way that the first-order data packet encrypted with the first object data secret can be decrypted for the control device (3) of the secured object (2),
transmitting (10) both the unencrypted first order data packet and the first order data packet (10b) encrypted with the first object data secret to a first mobile communication device (A) assigned to a first order user,
providing a second order data packet (11a) in the first mobile communication device, the second order data packet including at least
- a unique second identification identifier (ID_B),
- a first reference data (Ref_A) containing a reference to the first order data packet
- a second data set (Perm_2) containing a list of access rights to the secured device, the second data set being a subset of the first data set
- a second data secret (Key_B) usable for encryption and decryption of data,
- the first-order data packet (10b) encrypted with the first object data secret
- a first data container (11b) encrypted with the first data secret (Key_A) and containing at least the unique first identification identifier (ID_A) and the second data secret (Key_B),
signing the second order data packet (11a) using the first data secret (Key_A),
transmitting (11) the signed second-order data packet (11a) to a mobile second communication device (B) which is assigned to a second-order user, the second communication device (B) being hierarchically subordinate to the first communication device (A).

8. Method according to claim 7, wherein the first data set with a listing of access rights contains delegation authorisations associated with the access information indicating which of the listed access rights are delegable to hierarchically subordinate communication devices.

9. Method according to claim 7 or 8, wherein the first data secret and/or the second data secret each comprise a plurality of components, such that a different component of the data secret is usable for encryption using each data secret than for signature using the respective data secret.

10. Method according to any one of claims 7 to 9, comprising the further steps of:
Providing a third order data packet in the second mobile communication device, wherein the third order data packet comprises at least:
- a unique third identification identifier,
- second reference data containing a reference to at least one of the first order data packet and/or the second order data packet
- a third data set containing a listing of access rights to a secured device, the third data set being a subset of the second data set
- the first order data packet encrypted with the first object data secret,
- the first data container encrypted with the first data secret,
- a second data container encrypted with the second data secret and containing at least the unique second identification identifier,
signing the third-order data packet using the second data secret,
transmitting the signed third-order data packet to a mobile third communication device associated with a third-order user subordinate to the second-order user.

11. Method according to any one of claims 7 to 10, comprising the steps of
Transmitting (12) the second-order data packet (11a) from the second communication device (B) to the control device (3) of the secured device (2),
decrypting the first order data packet (10b) encrypted with the first object data secret in the control device (3) using the second object data secret,
verifying the signature of the second order data packet (11a) using the first data secret,
decrypting the first data container (11b) in the control device using the first data secret from the first order data packet,
verifying the first identification identifier from the decrypted first data container using the identification identifier from the first order data packet stored in the control device,
verifying the access rights from the second data set against the access rights from the first data set,
registering the access rights from the second data set as access rights of the second communication device, provided that all verifications have been successful.

12. Method according to any one of claims 7 to 10, comprising the steps of
Transmitting the third order data packet from the third communication device to the control device of the secured device,
Decrypting the first order data packet encrypted with the first object data secret in the control device using the second object data secret,
decrypting the first data container in the control device using the first data secret from the first order data packet,
verifying the signature of the third order data packet using the second data secret from the decrypted first data container,
verifying the first identification identifier from the decrypted first data container using the identification identifier from the first order data packet stored in the control device,
verifying the access rights from the third data set using the access rights from the first data set,
registering the access rights from the third data set as access rights of the third communication device, provided that all verifications were successful.

## Revendications

1. Procédé de délégation des droits d'accès à un objet sécurisé (2), comprenant les étapes suivantes :
mettre à disposition un paquet de données de premier ordre (5a) dans un dispositif de gestion central fiable (1), le paquet de données de premier ordre (5a) contenant au moins
- un premier identifiant unique (ID_A),
- un premier ensemble de données (Perm_1) contenant une liste de droits d'accès à un dispositif sécurisé,
- un premier secret de données (Key_A), utilisable pour le cryptage et le décryptage des données,
transmettre (5) le paquet de données de premier ordre (5a) à un premier dispositif de communication mobile (A) attribué à un utilisateur de premier ordre,
transmettre (6) le paquet de données de premier ordre (5a) depuis le dispositif de gestion central (1) à un dispositif de commande (3) du objet sécurisé (2), et stocker le paquet de données de premier ordre dans le dispositif de commande (3),
fournir un paquet de données de second ordre (7a) dans le premier dispositif de communication mobile (A), le paquet de données de second ordre (7a) comprenant au moins :
- un deuxième identifiant unique (ID_B),
- des premières données de référence (Ref_A), qui contiennent une référence au paquet de données de premier ordre,
- un deuxième ensemble de données (Perm_2) contentant une liste de droits d'accès au dispositif sécurisé, le deuxième ensemble de données étant un sous-ensemble du premier ensemble de données,
- un deuxième secret de données (Key_B), utilisable pour le cryptage et le décryptage des données,
- un premier conteneur de données (7b) crypté avec le premier secret de données (Key_A), qui contient au moins le premier identifiant unique (ID_A) et le deuxième secret de données (Key_B),
signer le paquet de données de deuxième ordre (7a) en utilisant le premier secret de données (Key_A),
transmettre (7) le paquet de données signé de deuxième ordre (7a) à un deuxième dispositif de communication mobile (B) associé à un utilisateur de deuxième ordre, le deuxième dispositif de communication étant hiérarchiquement subordonné au premier dispositif de communication.

2. Procédé selon la revendication 1, dans lequel le premier ensemble de données avec une liste de droits d'accès contient des autorisations de délégation associées aux informations d'accès, qui indiquent lesquels des droits d'accès listés peuvent être délégués à des dispositifs de communication hiérarchiquement subordonnés.

3. Procédé selon la revendication 1 ou 2, dans lequel le premier secret de données et/ou le deuxième secret de données présentent chacun plusieurs composants, de sorte qu'un composant du secret de données différent peut être utilisé pour le cryptage en utilisant chaque secret de données que pour la signature en utilisant le secret de données respectif.

4. Procédé selon l'une quelconque des revendications précédentes, comprenant les étapes supplémentaires suivantes :
fournir un paquet de données de troisième ordre (8a) dans le deuxième dispositif de communication mobile, le paquet de données de troisième ordre (8a) comprenant au moins :
- un troisième identifiant unique (ID_C),
- des deuxièmes données de référence (Ref_a, Ref_B) qui contiennent une référence à au moins l'un des paquets de données de premier ordre et/ou de deuxième ordre,
- un troisième ensemble de données (Perm_3) comprenant une liste de droits d'accès à un dispositif sécurisé, le troisième ensemble de données étant un sous-ensemble du deuxième ensemble de données (Perm_2),
- le premier conteneur de données (7b) crypté avec le premier secret de données,
- un deuxième conteneur de données (8b) crypté avec le deuxième secret de données, qui contient au moins le deuxième identifiant unique (ID_B),
signer le paquet de données de troisième ordre en utilisant le deuxième secret des données (Key_B),
transmettre le paquet de données signé de troisième ordre (8a) à un troisième dispositif de communication mobile (C) qui est associé à un utilisateur de troisième ordre subordonné à l'utilisateur de deuxième ordre.

5. Procédé selon l'une quelconque des revendications précédentes, comprenant les étapes consistant à
transmettre le paquet de données de deuxième ordre (8a) du deuxième dispositif de communication mobile au dispositif de commande (3) du dispositif sécurisé (2),
lire des premières données de référence et l'appel du contenu du paquet de données de premier ordre (5a) référencé par les premières données de référence et stocké dans le dispositif de commande,
vérifier la signature du paquet de données de deuxième ordre (7a) en utilisant le premier secret de données,
décrypter le premier conteneur de données (7b) dans le dispositif de commande (3) en utilisant le premier secret de données (Key_A) à partir du paquet de données de premier ordre (5a),
vérifier le premier identifiant (ID_A) provenant du premier conteneur de données décrypté (7b) à l'aide de l'identifiant provenant du paquet de données de premier ordre (5a) stocké dans le dispositif de commande (3),
vérifier les droits d'accès provenant du deuxième ensemble de données (Perm_2) à l'aide des droits d'accès provenant du premier ensemble de données (Perm_1),
enregistrer les droits d'accès provenant du deuxième ensemble de données (Perm_2) en tant que droits d'accès du deuxième dispositif de communication, dans la mesure où toutes les vérifications ont été effectuées avec succès.

6. Procédé selon l'une quelconque des revendications 1 à 5, comprenant les étapes consistant à
transmettre (9) le paquet de données de troisième ordre (8a) depuis le troisième dispositif de communication mobile au dispositif de commande (3) du dispositif sécurisé,
lire des deuxièmes données de référence (Ref_B) et appeler le contenu du paquet de données de premier ordre (5a) référencé par les deuxièmes données de référence et stocké dans le dispositif de commande,
décrypter le premier conteneur de données (7b) dans le dispositif de commande en utilisant le premier secret de données à partir du paquet de données de premier ordre (5a),
vérifier la signature du paquet de données de troisième ordre (8a) en utilisant le deuxième secret de données (Key_B) provenant du premier conteneur de données décrypté (7b),
vérifier le premier identifiant (ID_A) provenant du premier conteneur de données décrypté à l'aide de l'identifiant provenant du paquet de données de premier ordre (5a) stocké dans le dispositif de commande (3),
vérifier les droits d'accès provenant du troisième ensemble de données (Perm_3) à l'aide des droits d'accès provenant du premier ensemble de données (Perm_1),
enregistrer des droits d'accès provenant du troisième ensemble de données en tant que droits d'accès du troisième dispositif de communication, si toutes les vérifications ont été effectuées avec succès.

7. Procédé de délégation des droits d'accès à un objet sécurisé (2), comprenant les étapes suivantes :
mettre à disposition un paquet de données de premier ordre (10a) dans un dispositif de gestion centrale de confiance (1), le paquet de données de premier ordre contenant au moins
- un premier identifiant unique (ID_A),
- un premier ensemble de données (Perm_1) contenant une liste de droits d'accès à un dispositif sécurisé,
- un premier secret de données (Key_A), utilisable pour le cryptage et le décryptage des données,
crypter le paquet de données de premier ordre dans le dispositif de gestion central fiable (1), un premier secret de données d'objet (p_SO) spécifique à l'objet sécurisé (2) étant utilisé pour le cryptage, lequel est adapté à un deuxième secret de données d'objet mémorisé dans le dispositif de commande (3) de l'objet sécurisé de telle sorte que, pour le dispositif de commande (3) de l'objet sécurisé (2), le paquet de données de premier ordre crypté avec le premier secret de données d'objet peut être décrypté,
transmettre (10) à la fois le paquet de données de premier ordre non crypté et le paquet de données de premier ordre crypté avec le premier secret de données d'objet (10b) à un premier dispositif de communication mobile (A) attribué à un utilisateur de premier ordre,
fournir un paquet de données de second ordre (11a) dans le premier dispositif de communication mobile, le paquet de données de second ordre contenant au moins
- un deuxième identifiant unique (ID_B),
- des premières données de référence (Ref_A), qui contiennent une référence au paquet de données de premier ordre,
- un deuxième ensemble de données (Perm_2) comprenant une liste de droits d'accès au dispositif sécurisé, le deuxième ensemble de données étant un sous-ensemble du premier ensemble de données,
- un deuxième secret de données (Key_B), utilisable pour le cryptage et le décryptage des données,
- le paquet de données de premier ordre codé avec le premier secret de données d'objet (10b),
- un premier conteneur de données (11b) crypté avec le premier secret de données (Key_A), qui contient au moins le premier identifiant unique (ID_A) et le deuxième secret de données (Key_B),
signer le paquet de données de deuxième ordre (11a) en utilisant le premier secret de données (Key_A),
transmettre (11) le paquet de données signé de deuxième ordre (11a) à un deuxième dispositif de communication mobile (B) qui est associé à un utilisateur de deuxième ordre, le deuxième dispositif de communication (B) étant hiérarchiquement subordonné au premier dispositif de communication (A).

8. Procédé selon la revendication 7, dans lequel le premier ensemble de données comprenant une liste de droits d'accès contient des autorisations de délégation associées aux informations d'accès, qui indiquent lesquels des droits d'accès listés peuvent être délégués à des dispositifs de communication hiérarchiquement subordonnés.

9. Procédé selon la revendication 7 ou 8, dans lequel le premier secret de données et/ou le deuxième secret de données présentent chacun plusieurs composants, de sorte qu'un composant du secret de données différent peut être utilisé pour le cryptage en utilisant chaque secret de données que pour la signature en utilisant le secret de données respectif.

10. Procédé selon l'une quelconque des revendications 7 à 9, comprenant les étapes supplémentaires suivantes :
fournir un paquet de données de troisième ordre dans le deuxième dispositif de communication mobile, le paquet de données de troisième ordre comprenant au moins :
- un troisième identifiant unique,
- des deuxièmes données de référence contenant une référence à au moins l'un des paquets de données de premier ordre et/ou de deuxième ordre,
- un troisième ensemble de données comprenant une liste de droits d'accès à un dispositif sécurisé, le troisième ensemble de données étant un sous-ensemble du deuxième ensemble de données,
- le paquet de données de premier ordre codé avec le premier secret de données d'objet,
- le premier conteneur de données codé avec le premier secret de données,
- un deuxième conteneur de données crypté avec le deuxième secret de données, qui contient au moins le deuxième identifiant unique,
signer le paquet de données de troisième ordre en utilisant le deuxième secret des données,
transmettre le paquet de données signé de troisième ordre à un troisième dispositif de communication mobile associé à un utilisateur de troisième ordre subordonné à l'utilisateur de deuxième ordre.

11. Procédé selon l'une quelconque des revendications 7 à 10, comprenant les étapes consistant à
transmettre (12) le paquet de données de deuxième ordre (11a) depuis le deuxième dispositif de communication (B) au dispositif de commande (3) du dispositif sécurisé (2),
décrypter le paquet de données de premier ordre (10b) crypté avec le premier secret de données d'objet dans le dispositif de commande (3) en utilisant le deuxième secret de données d'objet,
vérifier la signature du paquet de données de deuxième ordre (11a) en utilisant le premier secret de données,
décrypter le premier conteneur de données (11b) dans le dispositif de commande en utilisant le premier secret de données à partir du paquet de données de premier ordre,
vérifier le premier identifiant provenant du premier conteneur de données décrypté à l'aide de l'identifiant provenant du paquet de données de premier ordre stocké dans le dispositif de commande,
vérifier les droits d'accès provenant du deuxième ensemble de données à l'aide des droits d'accès provenant du premier ensemble de données,
enregistrer des droits d'accès provenant du deuxième ensemble de données en tant que droits d'accès du deuxième dispositif de communication, si toutes les vérifications ont été effectuées avec succès.

12. Procédé selon l'une quelconque des revendications 7 à 10, comprenant les étapes consistant à
transmettre le paquet de données de troisième ordre depuis le troisième dispositif de communication au dispositif de commande du dispositif sécurisé,
décrypter le paquet de données de premier ordre crypté avec le premier secret de données d'objet dans le dispositif de commande en utilisant le deuxième secret de données d'objet,
décrypter le premier conteneur de données dans le dispositif de commande en utilisant le premier secret de données à partir du paquet de données de premier ordre,
vérifier la signature du paquet de données de troisième ordre en utilisant le deuxième secret de données provenant du premier conteneur de données décrypté,
vérifier le premier identifiant provenant du premier conteneur de données décrypté à l'aide de l'identifiant provenant du paquet de données de premier ordre stocké dans le dispositif de commande,
vérifier les droits d'accès provenant du troisième ensemble de données à l'aide des droits d'accès provenant du premier ensemble de données,
enregistrer des droits d'accès provenant du troisième ensemble de données en tant que droits d'accès du troisième dispositif de communication, si toutes les vérifications ont été effectuées avec succès.
